(19) Europäisches Patentamt
European Patent Office
Office européen des brevets

(11) **EP 2 695 926 A1**

(12) **EUROPÄISCHE PATENTANMELDUNG**

(43) Veröffentlichungstag:
**12.02.2014 Patentblatt 2014/07**

(51) Int Cl.:
*C09J 7/04* (2006.01)    *C09J 133/04* (2006.01)

(21) Anmeldenummer: **12179471.3**

(22) Anmeldetag: **07.08.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **tesa SE**
**20253 Hamburg (DE)**

(72) Erfinder:
• **Günzler, Dr. Fabian**
  **77652 Offenburg (DE)**
• **Siebert, Dr. Michael**
  **22869 Schenefeld (DE)**
• **Seitzer, Dennis**
  **22335 Hamburg (DE)**
• **Hölger, Christof**
  **79576 Weil am Rhein (DE)**

(54) **ESH-vernetztes Klebeband zum Ummanteln von insbesondere Kabelsätzen und Verwendung zur Ummantelung**

(57)    Die Erfindung bezieht sich auf ein Klebeband zum Ummanteln von langgestrecktem Gut wie insbesondere Kabelsätzen in Automobilen seine Herstellung und die Verwendung zur Ummantelung von Kabeln, wobei das erfindungsgemäße Klebeband einen Träger und eine auf mindestens einer Seite des Trägers aufgebrachte Haftklebemasse in Form einer getrockneten und Elektronenstrahl (ESH) vernetzten polymeren Acrylatdispersion umfasst, die aufgebaut ist aus a) monomeren Acrylaten und optional b) ethylenisch ungesättigten Comonomeren, die keine Acrylate sind, wobei die Haftklebemasse zwischen 15 und 100 Gewichtsteile eines Klebrigmachers (bezogen auf die Masse der getrockneten polymeren Dispersion) enthält.

Fig. 1

EP 2 695 926 A1

## Beschreibung

Die Erfindung bezieht sich auf ein Klebeband zum Ummanteln von langgestrecktem Gut wie insbesondere Kabelsätzen in Automobilen, seine Herstellung und die Verwendung zur Ummantelung von Kabeln.

Seit langem finden in der Industrie Klebebänder zur Herstellung von Kabelbäumen Verwendung. Dabei dienen die Klebebänder zum Bündeln einer Vielzahl von elektrischen Leitungen vor dem Einbau oder in bereits montiertem Zustand, um den Raumbedarf des Leitungsbündels durch Bandagieren zu reduzieren sowie zusätzlich Schutzfunktionen zu erzielen.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1A303-aa (Revision 09/2009) "Harness Tape Performance Specification). Im Folgenden werden diese Normen verkürzt mit LV 312 beziehungsweise mit Ford-Spezifikation bezeichnet.

Verbreitet sind Kabelwickelbänder mit Folien- und Textilträger, die in der Regel einseitig mit unterschiedlichen Haftklebemassen beschichtet sind. Diese Kabelwickelbänder müssen vier Hauptanforderungen erfüllen.

a. Leichte Abwickelbarkeit:

Das in Rollenform dargereichte Produkt muss für eine einfache Verarbeitung leicht abwickelbar sein, um einen Körper gewickelten Klebeband - die Neigung eines Klebebandendes verstanden abzustehen. Die Ursache ergibt sich aus der Kombination von Haltekraft durch den Klebstoff, der Steifigkeit des Trägers und des Durchmessers des Kabelsatzes. An die Verklebung/Bandagierung, die sich unter keinen Umständen wieder lösen darf, werden höchste Anforderungen an ein ausgewogenes Verhältnis von Kohäsion und Adhäsion gestellt, denn in der Praxis dürfen sich Klebebandenden nicht selbsttätig ablösen.

b. Kabelverträglichkeit:

Die Kabelisolierung darf nicht durch den Einfluss des Klebebandes in Kombination mit erhöhter Temperatur über längeren Zeitraum verspröden. Unterschieden wird hier nach der LV 312 zwischen vier Temperaturklassen T1 bis T4, entsprechend 80 °C (auch Temperaturklasse A genannt), 105 °C (auch Temperaturklasse B (105) genannt), 125 °C (auch Temperaturklasse C genannt) und 150 °C (auch Temperaturklasse D genannt), denen die umwickelten Kabel ohne Versprödung über 3000 h standhalten müssen. Es versteht sich von selbst, dass die Temperaturklassen T3 und T4 höhere Ansprüche an das Klebeband stellen als die unteren Klassen T1 und T2. Über die Einstufung T1 bis T4 entscheidet sowohl das Kabelisolierungsmaterial, als auch Haftklebemasse und Trägertyp.

c. Chemikalienvertäglichkeit bzw. Verträglichkeit mit Medien im Motorraum
d. Mechanische Stabilität:

Es gibt unebene, ungleichmäßige Untergründe im Automobil durch die Kabelstränge, Wellrohre und Abzweigungen. Dazu kommen noch Biege- und Zugbeanspruchung bei der Herstellung, dem Einbau und der späteren Nutzung im Motorraum eines Automobils oder auch in der Karosserie mit ständiger Biegebeanspruchung beim Öffnen von Türen.

Da das Ende des Klebebandes im Idealfall auf der eigenen Rückseite verklebt wird, muss eine gute Sofortklebkraft (Tack) auf diesem Untergrund vorhanden sein, damit nicht zu Beginn ein Abflaggen des Klebebandes auftritt. Um dauerhaft ein flaggingfreies Produkt zu gewährleisten, muss die Verankerung auf dem Untergrund und die innere Festigkeit der Klebemasse soweit ausgeprägt sein, dass die Klebeverbindung auch unter dem Einfluss von Spannung (Zug- und Biegebeanspruchung) Bestand hat.

Unter Flagging wird - bei einem um einen Körper gewickelten Klebeband - die Neigung eines Klebebandendes abzustehen verstanden. Die Ursache ergibt sich aus der Kombination von Haltekraft durch den Klebstoff, der Steifigkeit des Trägers und des Durchmessers des Kabelsatzes.

In der Praxis dürfen Klebebandenden sich nicht selbsttätig ablösen.

Der Nachweis der Flaggingbeständigkeit von WH-Kabelwickelbändern wird über die TFT-Methode (Threshold Flagging Time) geführt. Als Zielgröße für ein einwandfrei flaggingfreies Gewebeprodukt wird dabei ein Grenzwert von 2000 min TFT definiert.

Kabelwickelbänder mit Haftklebemassen auf Basis von Naturkautschuk zeigen zumeist eine gute Abflaggresistenz, weisen jedoch eine über die Lagerzeit, sowie bei zunehmenden Temperaturen ansteigende Abrollkraft auf.

Zudem erfüllen sie nur die unteren Temperaturklassen für die Kabelverträglichkeit. Nach DE 198 46 901 A1 werden Naturkautschukmassen durch die Trägerseite des Klebebandes bestrahlt. UV-vernetzbare Kabelwickelbänder mit Haftklebemassen auf Basis von Polyacrylsäureestern erfüllen die hohen Temperaturklassen, neigen aber zum Abflaggen. EP 2 298 845 A1 vermindert die Flaggingneigung durch die Verringerung der Biegesteifigkeit in Kettrichtung. EP1 431 360 A2 offenbart auf sich selbst wickelbare Klebebänder mit einem thermisch verfestigten Vlies mit einem Flächengewicht von 10 bis 50 g/m$^2$ und UVvernetztem Acrylatklebstoff. Bekannt sind auch Gewebeklebebänder, die auf einer Acrylat-Hotmeltmasse basieren und nach LV 312 in die Temperaturklasse D (150 °C) eingestuft sind. Diese weisen eine geringe Masseverankerung auf und führt bei glatten Trägeroberflächen zu Masseumspulungen, wie Vergleichsbeispiel 4 aufzeigt. Zudem können Acrylat-Hotmeltklebemassen nur unter erschwerten Bedingungen abgemischt werden um Harze oder Füllstoffe einzuarbeiten.

Weitere Gewebebänder weisen die gleiche Klebemasse auf, die durch Masseauftrag und UV-Vernetzung auf die spätere Anwendung eingestellt werden können. Nachteilig an diesem Standartsortiment ist, dass sie bei kritischen Wicklungen, wie Abzweigungen, Übergängen, kleinen Durchmessern bei der Umwicklung merklich abstehende Bandenenden aufweisen. Ebenfalls nachteilig ist, dass sie zur Erzeugung von abwickelbaren Produkten mindestens mit 20 mJ/cm$^3$ UV-Dosis bestrahlt werden müssen, das klebtechnische Optimum jedoch bei 10 mJ/cm$^3$ UV-Dosis erhalten wird. Demgegenüber zeigen die Produkte dann aber unterhalb einer UV-Dosis von 20 mJ/cm$^3$ eine zu starke Seitenkantenklebrigkeit auf der Rolle. Daher müssen diese Rollen beim Verpacken durch Zwischenlagen voneinander getrennt werden. Ein weiterer Nachteil ist, dass es nur ein kleines Prozessfenster gibt, in dem das Flaggingverhalten und das Auffließen aufgrund der geringen Vernetzung ausreichend ist, was jedoch leicht aufgrund der geringen Vernetzung bei relativ kurzen Polymerketten mit geringem Molekulargewicht zu Kohäsionsbrüchen führt. Eine zusätzliche Vernetzung ist daher notwendig, um eine ausreichende Kohäsion zu gewährleisten. Bei auftretenden Spannungen, wie Zug- oder Biegebelastung bricht die Klebemasse leicht und die Bandenenden heben sich ab.

Der vorliegenden Erfindung liegt die Aufgabe zugrunde, ein Klebeband zur Verfügung zu stellen, das trotz leichter Abwickelbarkeit eine gute Abflaggresistenz hat und eine gute Sofortklebekraft aufweist. Zudem sollen die Klebebänder leicht auf individuelle Anforderungen eingestellt werden können, wie besondere Temperaturgegebenheiten, hohe Feuchte und/oder besondere mechanische Beanspruchungen, wie enge Radien oder auch ständiges Verbiegen. Das Klebeband soll ein besonders einfaches, preiswertes und schnelles Ummanteln von langgestrecktem Gut wie Kabelsätzen in Automobilen ermöglichen. Vorzugsweise wird eine gute Kabelverträglichkeit über alle genannten Temperaturklassen angestrebt.

Gelöst wird diese Aufgabe durch ein Klebeband, wie es im Hauptanspruch niedergelegt ist. Gegenstand der Unteransprüche sind dabei vorteilhafte Weiterbildungen des Klebebands und Verfahren zur Anwendung des Klebebands.

Gegenstand der Erfindung ist ein Klebeband, insbesondere zum Umwickeln von Kabeln, umfassend einen vorzugsweise textilen Träger und eine auf mindestens einer Seite des Trägers aufgebrachte Haftklebemasse in Form einer getrockneten und Elektronenstrahl (ESH) vernetzten polymeren Acrylatdispersion, insbesondere einer wässrigen Acrylatdisperion, bevorzugt mit einem Gelwert von größer gleich 40 %, bestimmt mittels Soxhlet-Extraktion, wobei die polymere Acrylatdispersion Polymere umfasst, die aufgebaut sind aus

a) monomeren Acrylaten und optional
b) ethylenisch ungesättigten Comonomeren, die keine Acrylate sind, wobei die Haftklebemasse zwischen 15 und 100 Gewichtsteile eines Klebrigmachers (bezogen auf die Masse der getrockneten polymeren Dispersion) enthält.

Die erfindungsgemäß in der Haftklebemasse eingesetzte Acrylatdispersion enthält Polymere, die aufgebaut sind aus monomeren Acrylaten und optional ethylenisch ungesättigten Comonomeren, die keine Acrylate sind, wobei die getrocknete und nicht ESH vernetzte Acrylatdispersion bevorzugt einen Gelwert von größer gleich 40 % aufweist. Als monomere Acrylate werden vorliegend jene Acrylate verstanden, in denen das Acrylat über eine Carbonyl-Gruppe (C=0) verfügt, wie vorzugsweise alle monomeren Acrylate mit einer ggf. funktionalisierten Stammstruktur C=C-(C=0)-, so dass Acrylamide zu den Acrylaten gerechnet werden und Acrylnitrile zu den ethylenisch ungesättigten Comonomeren.

Bevorzugt umfasst die Haftklebemasse eine Acrylatdispersion, vorzugsweise eine wässrige Acrylatdispersion, die Polymere enthält, die aufgebaut sind aus

a) größer gleich 40 Gew.-% monomeren Acrylaten und
b) 0 bis 60 Gew.-% ethylenisch ungesättigten Comonomeren,

wobei die monomeren Acrylate mono-, di und/oder mehrfunktionelle Acrylate umfassen und wobei die ethylenisch ungesättigten Comonomere ausgewählt sind aus Ethylen enthaltenden Monomeren, Vinyl-funktionellen Monomeren und ungesättigten Kohlenwasserstoffen mit 3 bis 8 C-Atomen in Bezug auf die Polymeren (ausgedrückt als 100 Gew.-%) in der Acrylatdispersion.

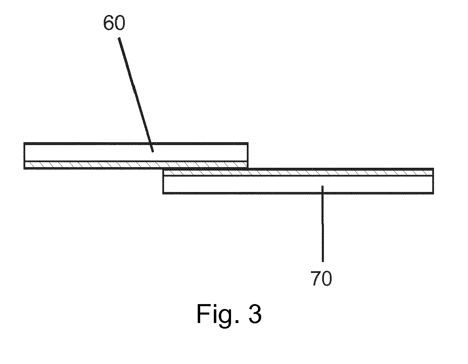

Die Arcrylatdispersionen, insbesondere wässrige Arcrylatdispersionen, zeichnen sich im Gegensatz zu den Acrylat-Hotmelt und lösemittelbasierten Acrylate dadurch aus, dass in ihnen zu einem gewissen Grad noch eine Separierung der Polymerknäule vorliegt, die aus den einzelnen Dispersionskugeln hervorgehen (s. u.a. BASF-Handbuch Lackiertechnik, Artur Goldschmidt, Hans-Joachim Streitberger, 2002, Kap. 3.1.2.1, Abb. 3.1.5, S. 337 ff.).

Bei Arcrylatdispersionen kann das Molekulargewicht aufgrund des hohen Gelanteils nicht sinnvoll bestimmt werden. Der hohe Gelanteil resultiert aus den Kettenüberragungsreaktionen in den Dispersionspartikeln. Insbesondere bei der Emulsionspolymerisation ist die Wahrscheinlichkeit für eine solche Vernetzung hoch, da sich in den Dispersionspartikeln nur wachsende Polymerketten und Monomere befinden, so dass diese Vernetzung gegenüber der Lösemittelpolymerisation stark erhöht ist. Die Besonderheit der Acrylatdispersionen, insbesondere der wässrigen Acrylatdispersionen, ist, dass durch diese Art der Vernetzung im abgegrenzten Raum der Dispersionspartikel verzweigte Moleküle mit einem hohen Molekulargewicht entstehen. Der hohe Gelwert der Acrylatdispersionen beschreibt auch gut die Situation, dass sie häufig ohne weitere Vernetzung als Haftklebemassen eingesetzt werden können. Anders als Acrylat-Hotmelt oder lösemittelbasierte Acrylatklebemassen, die in aller Regel nachvernetzt werden müssen. Typische Acrylat-Hotmeltmassen weisen einen geringen Gelwert von 10% auf.

Die in den erfindungsgemäßen Haftklebemassen verwendeten polymeren Acrylatdispersionen, insbesondere getrocknete ursprünglich wässrige Acrylatdispersionen, weisen dagegen einen Gelwert von größer gleich 40 % auf, der mittels Soxhlet-Extraktion bestimmt werden kann. Typische Acrylatdispersionen, wie sie erfindungsgemäß zum Einsatz kommen können, werden in DE10 2011 075 156 A1, DE10 2011 075159 A1, DE10 2011 075 152 A1 und DE10 2011 075 160 A1, die beim Deutschen Patent- und Markenamt eingereicht wurden, beschrieben, auf die in Bezug auf die erfindungsgemäß einsetzbaren Acrylatdispersionen vollständig Bezug genommen wird. Diese Acraltdispersionen werden nachstehend näher erläutert.

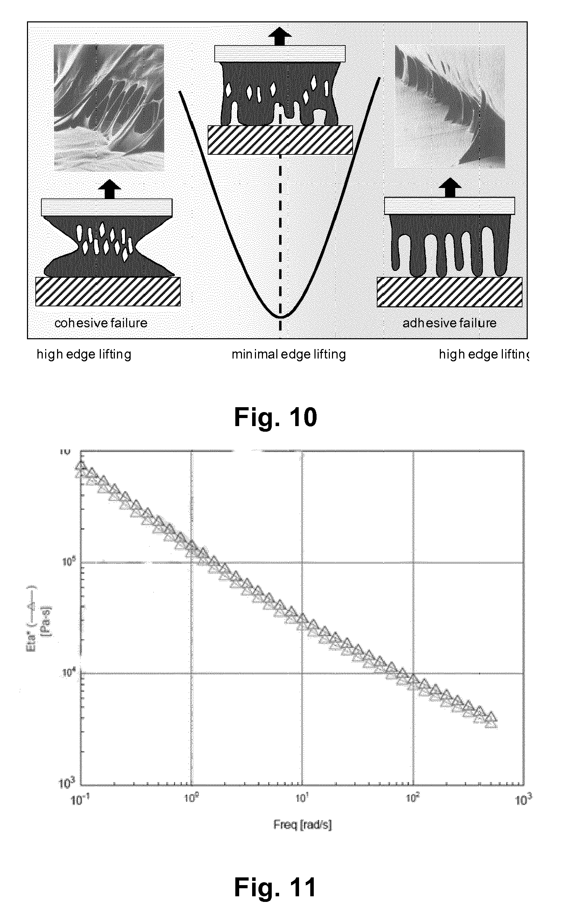

Ein besonderer Vorteil der erfindungsgemäßen harzabgemischten Acrylatdispersionen liegt in der einfachen und wirtschaftlichen individuellen Abstimmbarkeit der Acrylatdispersionen an die jeweiligen Anforderungen und das gewünschte Trägermaterial. Ein zweiter Vorteil liegt darin, dass eine ggf. gewünschte Vernetzung der harzmodifizierten Acrylatdispersionen nach der Trocknung im Beschichtungsprozess leicht von der Masseseite mittels ESH erfolgen kann, um das Optimum aus Kohäsion und Adhäsion einzustellen (s. Fig. 10). Ein wesentlicher Vorteil der sich in den Eigenschaften der Acrylatdispersionen zeigt, ist, dass die Acrylatdispersionen - im Gegensatz zu Hotmelt- und Lösemittel-Klebemassen - zu einem gewissen Grad eine Separierung der Polymerknäuel, die aus den einzelnen Dispersionskugeln hervorgehen behalten.

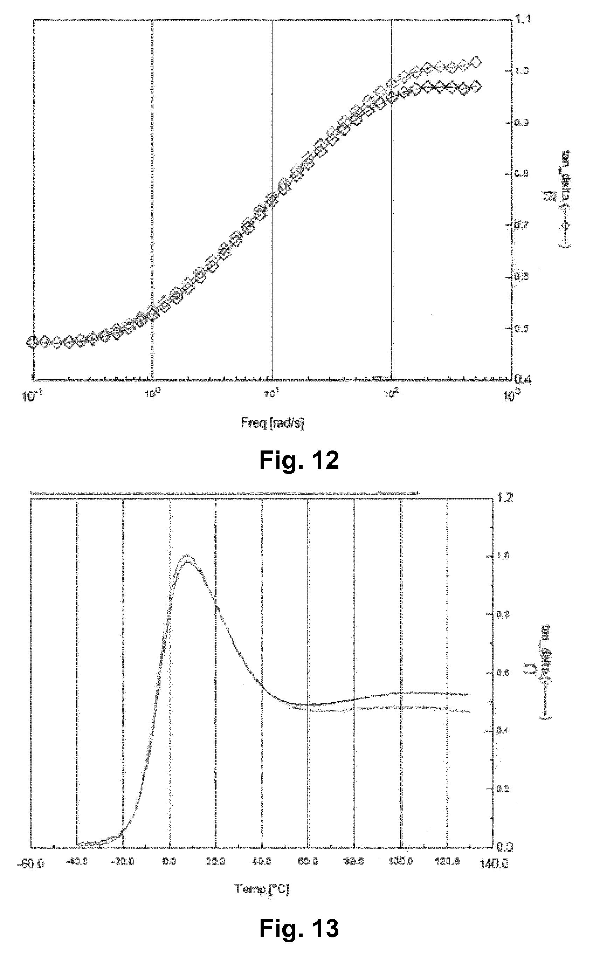

Durch die ESH-Bestrahlung entsteht eine weitmaschige Vernetzung innerhalb der Polymerknäule und führt zu einer Erhöhung des Molekulargewichtes in den Polymerknäueln. Vorteilhafterweise findet nahezu keine Vernetzung zwischen den Polymerknäueln statt, so dass die Masse gut fließfähig bleibt und eine gute Benetzung des Haftgrundes ermöglicht. Belegt werden kann dieses Phänomen mittels rheologischer Untersuchungen (wie DMA, Dynamisch Mechanische Analyse) die in Figur 11 dargestellt sind. So zeigt der in Figur 11 dargestellte Frequenzsweep bei RT (25 °C), dass das Viskositätsverhalten bei unterschiedlichen Schergeschwindigkeiten der nicht ESH-vernetzten und der ESH-vernetzten Proben nahezu identisch ist. Die Masse, die mit einer ESH-Leistung von 50 kGy bestrahlt wurde, zeigt gegenüber der unbestrahlten Probe keine Veränderung des tan delta bei 0,1 rad/s. Bei 100 rad/s zeigt sich ein leichter Anstieg des tan delta. Die Kombination aus dem tan delta Wert bei kleinen Kreisfrequenzen (0,1 rad/s) und der komplexen Viskosität gibt Hinweise auf die statische Scherfestigkeit. In der Tendenz bedeuten sinkende tan delta Werte bei gleichzeitig hoher komplexer Viskosität eine steigende Scherfestigkeit. Bei tan delta Werten kleiner 0,2 überwiegt die Neigung zum Adhäsionsbruch. Generell sinkt tan delta mit steigender Vernetzung und/oder Molmasse Figur 12. Die hohen Kreisfrequenzen von 100 rad/s oder höher reflektieren die Tackeigenschaft einer Haftklebemasse. Dabei stehen steigende tan delta Werte bei niedrigen komplexen Viskositäten für zunehmenden Tack.

Der in Figur 13 dargestellte Temperatursweep im Bereich von -40 °C bis 130 °C liefert für die nicht ESH-vernetzte und die ESH-vernetze Probe eine nahezu identische Glasübergangstemperatur (Tg). Die Erhöhung des Molekulargewichts innerhalb der Polymerknäuel bewirkt eine gewisse Erhöhung der Kohäsion der Klebmasse und führt zu einem zäheren Ablöseverhalten beim Auftreten von Spannungen wie in Figur 10 dargestellt. Erhalten werden nach dem erfindungsgemäßen Verfahren Klebebänder mit gut vertretbarer Seitenkantenklebrigkeit auch bei geringer bis keiner ESH-Vernetzung.

Besondere Vorteile bieten die erfindungsgemäß eingesetzten Acrylatdispersionen durch sehr einfache Abmischbarkeit mit vordispergierten Harzen, Hilfsstoffen, Füllstoffen, Alterungsschutzmitteln, etc. Es ist sogar möglich die erfindungsgemäß einzusetzenden Haftklebemassen umfassend Acrylatdispersionen so einzustellen, dass sie bereits ohne zusätzliche Vernetzung (ESH-Vernetzung) eine ausreichende Kohäsion liefern und somit, unter leicht erhöhten Abrollkräften, auf fertigen Klebebandrollen zum Einsatz kommen können. Die ESH-Vernetzung ist somit nur ein bedingt kritischer Prozessfaktor.

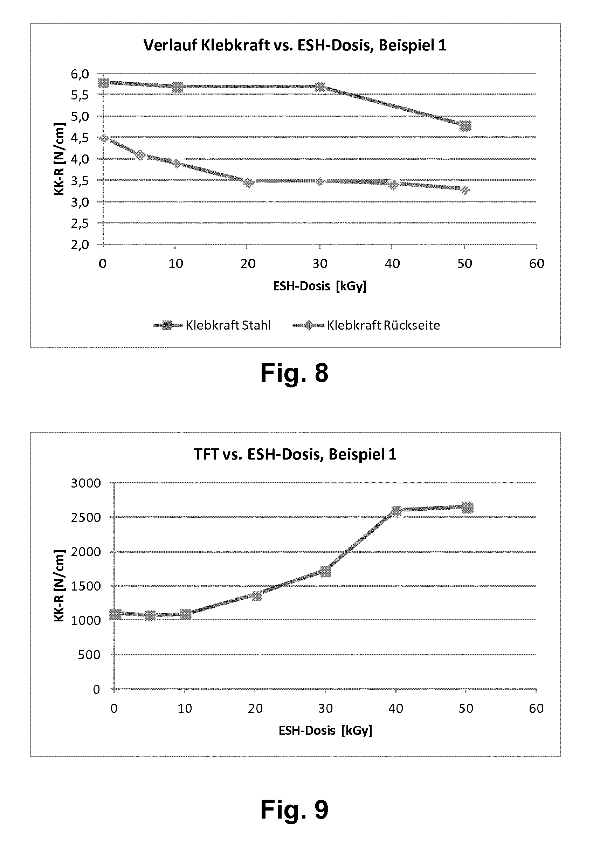

Generell zeigen die erfindungsgemäß einzusetzenden Haftklebemassen basierend auf Acrylatdispersionen bezüglich der Vernetzung ein sehr großes Prozessfenster, wobei sich bei steigender ESH-Dosis die TFT-Zeit auf einem bestimmten Niveau einpendelt (s. Figur 8) und zugleich die Klebkräfte nur sehr langsam abnehmen und sich auf einem Niveau mit guten Klebekräften stabilisieren. Eine als "Übervernetzung" zu bezeichnende ESH-Vernetzung bei den durchgeführten Testreihen, die nicht gänzlich in den Beispielen wiedergegeben sind, konnte nicht beobachtet werden.

Gegenstand der Erfindung ist ein Klebeband gemäß den genannten Merkmalen, dessen TFT-Wert (Threshold Flagging Time) nach der Elektronenstrahl-Vernetzung (ESH) vorzugsweise größer gleich 1000 Minuten beträgt, insbesondere größer gleich 1500, bevorzugt größer gleich 1700, besonders bevorzugt größer gleich 2000 Minuten, vorzugsweise größer gleich 2500 Minuten. Ein wesentlicher Vorteil der erfindungsgemäß eingesetzten Haftklebemassen umfassend Acrylatdispersionen zeigt sich in den geringen geeigneten Elektronenstrahldosen von besonders bevorzugt größer gleich 5 kGy bis 10 kGy, insbesondere 10 bis 20, 20 bis 30, 30 bis 40, alternativ besonders bevorzugt von 35 bis 45, oder auch größer gleich 40 bis maximal 50 kGy, zweckmäßig bis zu 80 kGy, die ausreichend sind, insbesondere der als ESH-Dosis von Masseseite, um in Abhängigkeit vom verwendeten Trägermaterial und der jeweiligen Haftklebemasse TFT-Werte von größer 1500 Minuten, vorzugsweise von größer 2000 Minuten, bevorzugt größer gleich 2100, besonders bevorzugt größer gleich 2200, vorzugsweise TFT-Werte von größer gleich 2500 oder sogar größer gleich 3000 und größer gleich 4000 Minuten zu erzielen.

Erfindungsgemäße Klebebänder weisen gemäß der Messmethode LV 312 (Messung erfolgt mit 19 mm breiten Klebebandstreifen, als Unterlage Glas, nach 24 Stunden Lagerung) kein Flaggingverhalten auf: Das abstehende Bandenende weist maximal eine Länge von kleiner gleich 2 mm auf, vorzugweise kleiner gleich 1 mm bis absolut kein Flagging, jeweils mit einer Schwankungsbreite von plus/minus 0,5 mm, vorzugsweise von plus/minus 0,2 mm.

Gegenstand der Erfindung ist auch ein Klebeband mit auf einer Seite des Trägers aufgebrachten Haftklebemasse, dessen Flächengewicht kleiner gleich 120 g/m$^2$ beträgt, insbesondere kleiner gleich 100 g/m$^2$, bevorzugt kleiner gleich 90 g/m$^2$, besonders bevorzugt kleiner gleich 80 g/m$^2$, vorzugsweise kleiner gleich 70 g/m$^2$, und in Alternativen auch gleicher gleich 60 g/m$^2$ und kleiner gleich 50 g/m$^2$, jeweils mit einer Schwankungsbreite von plus/minus 2 g/m$^2$, bevorzugt mit plus/minus 1 g/m$^2$, wobei vorzugsweise mit den nicht ESH-vernetzten Haftklebemassen bereits TFT-Werte von 1000 Minuten erzielt werden können.

Erfindungsgemäße Klebebänder zeichnen sich vorteilhaft dadurch aus, dass der TFT-Wert (Threshold Flagging Time) nach der Elektronenstrahl-Vernetzung im Vergleich zum TFT-Wert vor der Elektronenstrahl-Vernetzung (ESH) etwa um den Faktor 2 größer ist. Vorzugsweise reichen dazu bereits geringe ESH Dosen von kleiner gleich 40 kGy, insbesondere kleiner gleich 35 kGy, besonders bevorzugt kleiner gleich 30 kGy, vorzugsweise von kleiner gleich 20 kGy, bis hin zu kleiner gleich 10 kGy aus.

Ein weiterer Gegenstand der Erfindung sind auch Klebebänder mit auf einer Seite des Trägers aufgebrachter Haftklebemasse und einem Träger, der mit einer zusätzlichen Acrylatdispersion imprägniert ist, wobei diese Acrylatdispersion nicht in das Flächengewicht der Haftklebemasse eingerechnet wird. Die Imprägnierung kann mit einem Flächengewicht von kleiner gleich 30 g/m$^2$ aufgetragen werden, insbesondere kleiner gleich 25 g/m$^2$, bevorzugt kleiner gleich 20 g/m$^2$, besonders bevorzugt kleiner gleich 10 g/m$^2$, mit einer Schwankungsbreite von plus/minus 5 g/m$^2$. Die für die Imprägnierung verwendeten Acrylatdispersionen zeichnen sich dadurch aus, dass sie in getrocknetem Zustand vorzugsweise nur sehr geringe oder keine haftklebrigen Eigenschaften aufweisen. Daher können Acrylatdispersionen oder optional auch Polyurethan, kautschukbasierte oder SBR-Imprägnierungen eingesetzt werden, die in getrocknetem Zustand vorzugsweise nur sehr geringe oder keine haftklebrigen Eigenschaften aufweisen. Auf diese Weise wird ein Verblocken der Lagen auf dem Ballen verhindert. Optional können erfindungsgemäße Acrylatdispersion mit geringen oder keinen haftklebrigen Eigenschachten, d.h. ohne Harzen, eingesetzt werden.

Mit den erfindungsgemäß ESH-vernetzten Acrylatdispersionen enthaltenden Haftklebemassen können selbst mit Trägermaterialien, deren Flächengewicht über weite Bereiche variiert werden, wie von 30 bis 250 g/m$^2$, vorzugsweise von 50 bis 200 g/m$^2$, besonders bevorzugt von 60 bis 150 g/m$^2$, und/oder deren Biegesteifigkeit im Bereich von 0 bis 30 mN/60mm als Rohträger (MD, machine direction) variieren, optional von 2 bis 30 mN/60mm als Rohträger (MD) variieren, und somit auch deren Biegesteifigkeit stark unterschiedlich ist, sehr gute flaggingfreie Produkte mit geringem Flächenauftrag an Acrylatdispersionen erhalten werden.

Ebenso Gegenstand der Erfindung sind Klebebänder mit einer Biegesteifigkeit des Klebebandes (MD) mit ESH-vernetzten Haftklebemassen mit Werten von 0 bis 30 mN/60mm, alternativ von 4 bis 30 mN/60mm, vorzugsweise von 6 mN/60 mm bis 25 mN/60mm. In Abhängigkeit vom Masseauftrag und dem Eindringverhalten der Masse in den Träger kann die Biegesteifigkeit des Trägers beeinflusst werden. Generell wird eine möglichst geringe Biegesteifigkeit angestrebt.

Ebenso bevorzugt sind Klebebänder mit einer Kombination von Flächengewicht des textilen Trägers, insbesondere Vliesträgers von 30 bis 250 g/m$^2$, bevorzugt von 60 bis 150 g/m$^2$, mit einem Flächengewicht der Haftklebemasse von 20 bis 150 g/m$^2$, bevorzugt von 50 bis 150 g/$_M$$^2$, umfassend 15 bis 50 Gewichtsteile eines Harzes, bevorzugt 30 bis 50 Gewichtsteile Harz, wie vorzugsweise eines Kolophoniumesterharzes, optional mit einer Imprägnierung mit einer Acrylatdispersion mit einem Flächengewicht von bis zu 30 g/m$^2$.

Ebenso ist es besonders bevorzugt, wenn die Klebebänder in Kombination ein Flächengewicht des Gewebeträgers von 50 bis 250 g/m$^2$, bevorzugt von 60 bis 150 g/m$^2$, ein Flächengewicht der Haftklebemasse von 30 bis 150 g/m$^2$, bevorzugt von 50 bis 150 g/m$^2$, umfassend 15 bis 50 Gewichtsteile eines Harzes, bevorzugt 30 bis 50 Gewichtsteile Harz, wie vorzugsweise eines Kolophoniumesterharzes, optional mit einer Imprägnierung mit einer Acrylatdispersion mit einem Flächengewicht von bis zu 30 g/m², entspricht, wobei besonders bevorzugt der Träger ein PET-Gewebe ist.

Ein besonderer Vorteil der Klebebänder gemäß der Erfindung liegt darin, dass die Viskosität der Haftklebemasse durch die Elektronenstahl-Vernetzung (ESH) im Wesentlichen unverändert bleibt oder die Elektronenstrahl-Vernetzung von Polymeren im Wesentlichen innerhalb der Polymerknäule erfolgt, wobei sich das Molekulargewicht der Polymere in den Polymerknäulen im Vergleich zu den unbestrahlten Polymerknäulen erhöht, insbesondere ist die Elektronenstrahl-Vernetzung der Polymere zwischen den Polymerknäulen im Vergleich zur Elektronenstrahl-Vernetzung innerhalb der Polymerknäule geringer, vorzugsweise vernachlässigbar. Ersichtlich ist dies an den DMA-Werten gemäß Figur 11 mithilfe der Viskositätsverläufe von ESH-vernetztem und unvernetztem Muster, welche über einen bestimmten Frequenzbereich von 0,1 bis 100 rad/s ausgewertet wurden (von 0,1 bis weit über 100 rad/s aufgezeichnet) und den Einfluss der ESH-Vernetzung auf die Viskosität der Haftklebemasse mit und ohne ESH-Vernetzung zeigt. So zeigt Figur 11 eindrucksvoll, dass sich die Viskosität aufgrund der ESH-Vernetzung im Wesentlichen nicht ändert. Gleichfalls kann dies anhand der Gelwerten vor und nach der ESH Vernetzung dargestellt werden, die beide im Bereich von 40 bis 60 %, vorzugsweise zwischen 42 bis 55 % oder zwischen 44 bis 50 % liegen, wobei die Messungenauigkeit plus/minus 3 % betragen kann.

Gemäß bevorzugter Ausführungsformen umfasst das Klebeband, insbesondere zum Umwickeln von Kabeln, einen Träger und eine auf mindestens einer Seite des Trägers aufgebrachte Haftklebemasse in Form einer getrockneten und Elektronenstrahl vernetzten Acrylatdispersion, die insbesondere von der Masseseite ESH-vernetzt ist, wobei die Acrylatdispersion, insbesondere die ungetrocknete Acrylatdispersion, Polymere umfasst, die aufgebaut oder erhältlich sind aus, (i) a) monomeren Acrylaten ausgewählt aus 0 bis 90 Gew.-% n-Butylacrylat, 2-Ethyl-hexylacrylat, 2-Ethylhexylacrylat und Ethylacrylat und 0 bis 2 Gew.-% eines di- oder mehrfunktionellen Monomers, besonders vorzugsweise zu 0 bis 1 Gew.-% eines di- oder mehrfunktionellen Monomers, b) ethylenisch ungesättigten Comonomeren zu 10 bis 60 Gew.-% ausgewählt aus mindestens einem ethylenisch ungesättigten monofunktionellen Monomer oder einer Mischung dieser und 0 bis 10 Gew.-% eines ethylenisch ungesättigten Monomers mit einer Säure- oder Säureanhydridfunktion, oder

(ii) a) monomeren Acrylaten ausgewählt aus 90 bis 99 Gew.-% n-Butylacrylat und/oder 2-Ethylhexylacrylat und 0 bis 2 Gew.-% eines di- oder mehrfunktionellen Monomers, besonders vorzugsweise zu 0 bis 1 Gew.-% eines di- oder mehrfunktionellen Monomers, b) ethylenisch ungesättigten Comonomeren zu 10 bis 1 Gew.-% ausgewählt aus mindestens einem ethylenisch ungesättigten monofunktionellen Monomer oder einer Mischung dieser und 0 bis 10 Gew.-% eines ethylenisch ungesättigten Monomers mit einer Säure- oder Säureanhydridfunktion, oder

(iii) a) monomeren Acrylaten ausgewählt aus 30 bis 69 Gew.-%, vorzugsweise 40 bis 60 Gew.-% Alkylacrylester mit $C_4$- bis $C_{12}$-Alkylresten, b) ethylenisch ungesättigten Comonomeren zu 5 bis 25 Gew.-%, vorzugsweise 10 bis 22 Gew.-% Ethylen, 20 bis 55 Gew.-%, vorzugsweise 28 bis 38 Gew.-% Vinylacetat und 0 bis 10 Gew.-% andere ethylenisch ungesättigte Verbindungen; wobei die Acrylatdispersion hergestellt wird, indem die Monomere gemäß i, ii und/oder iii in einer Emulsionspolymerisation umgesetzt werden, jeweils in Bezug auf die Polymeren (ausgedrückt als 100 Gew.-%) in der Acrylatdispersion. Dabei ist es besonders bevorzugt, wenn die Haftklebemasse zwischen 30 und 50 Gewichtsteile eines Klebrigmachers (bezogen auf die Masse der getrockneten polymeren Dispersion) enthält, besonders bevorzugt Kolophoniumesterharz.

Gemäß weiterer bevorzugter Ausführungsformen umfasst das Klebeband, insbesondere zum Umwickeln von Kabeln, einen Träger und eine auf mindestens einer Seite des Trägers aufgebrachte Haftklebemasse in Form einer getrockneten und Elektronenstrahl vernetzten Acrylatdispersion, wobei die Acrylatdispersion, insbesondere die ungetrocknete Acrylatdispersion, Polymere umfasst, die aufgebaut oder erhältlich sind aus a) monomeren Acrylaten, die ausgewählt sind aus Alkyl(meth)acrylaten, bevorzugt Ci- bis $C_{20}$-Alkyl(meth)acrylate $C_1$- bis $C_{10}$-Hydroxyalkyl(meth)acrylate, wie insbesondere Hydroxyethyl- oder Hydroxypropyl- (meth)acrylat, Säureamide wie Acrylamid oder Methacrylamid, sowie Mischungen von zwei oder mehreren der Monomere, aus b) monomeren Comonomere, die ausgewählt sind aus Ethylen, aromatischen Vinylmonomeren, wie Styrol, α-Methylstyrol und Vinyltoluol, Divinylbenzol, Vinylester aus bis zu 20 Kohlenstoffatomen enthaltenden Carbonsäuren, wie Vinyllaurat, Vinylether aus bis zu 10 Kohlenstoffatomen enthaltenden Alkoholen wie Vinylmethylether oder Vinylisobutylether, Vinylhalogenide, wie Vinylchlorid oder Vinylidendichlorid, Itaconsäure, Maleinsäure, Fumarsäure und/oder Maleinsäureanhydrid, Acrylnitril und/oder Methacrylnitril, ungesättigten Kohlenwasserstoffen mit 3 bis 8 Kohlenstoffatomen wie Propen, Butadien, Isopren, 1-Hexen oder 1-Octen sowie Mischungen von zwei oder mehr Comonomeren.

Gemäß weiterer bevorzugter Ausführungsformen umfasst das Klebeband, insbesondere zum Umwickeln von Kabeln, umfassend einen Träger und eine auf mindestens einer Seite des Trägers aufgebrachte Haftklebemasse in Form einer getrockneten und Elektronenstrahl vernetzten Acrylatdispersion, wobei die Acrylatdispersion Polymere umfasst, die aufgebaut oder erhältlich sind aus a) monomeren Acrylaten, die ausgewählt sind aus Acrylsäure oder Methacrylsäure, n-Butylacrylat, Ethylacrylat wie 2-Ethylhexylacrylat, 2-Ethylhexylacrylat sowie Mischungen von zwei oder mehr Monomeren, die aufgebaut oder erhältlich sind aus a) di- oder mehrfunktionellen Monomeren, die ausgewählt sind aus Alkyldiacrylaten wie 1,2-Ethylenglykoldiacrylat, 1,4-Butandioldiacrylat, 1,6-Hexandioldiacrylat, 1,8-Octandioldiacrylat oder 1,12-Dodecandioldiacrylat und Triacrylaten wie Trimethylolpropantriacrylat und Tetraacrylate wie Pentaerythritoltetraacrylat sowie optional in Kombination mit den unter b) genannten monomeren Comonomeren.

Demgemäß betrifft die Erfindung ein Klebeband insbesondere zum Umwickeln von Kabeln, bestehend aus einem vorzugsweise textilen Träger und aus einer auf mindestens einer Seite des Trägers aufgebrachten Haftklebemasse in Form einer getrockneten Polymerdispersion, wobei das Polymer aufgebaut ist aus:

(a.1) 40 bis 90 Gew.-% n-Butylacrylat und/oder 2-Ethylhexylacrylat

(a.2) 60 bis 10 Gew.-% eines oder mehreren von (a.1) verschiedenen ethylenisch ungesättigten monofunktionellen Acrylat-Monomeren sowie

(a.3) 0 bis 1 Gew.-% eines di- oder mehrfunktionellen Acrylat-Monomers,

(b) 0 bis 10 Gew.-% eines ethylenisch ungesättigten Monomers mit einer Säure- oder Säureanhydridfunktion, das kein Acrylat ist, und/oder (a.4) 0 bis 5 Gew.-% eines ethylenisch ungesättigten Arylat-Monomers mit einer Säure- oder Säureanhydridfunktion und die Haftklebemasse zwischen 15 und 100 Gewichtsteile eines Klebrigmachers (bezogen auf die Masse der getrockneten Polymerdispersion) enthält.

Die Klebemasse ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Bevorzugt ist Ethylacrylat als Monomer (a.2) oder zumindest ein Teil der Monomere (a.3). Bevorzugt ist als Monomer (a.1) 2-Ethylhexylacrylat. Gemäß einer weiteren bevorzugten Ausführungsform besteht das Monomer (a) aus 2-Ethylhexylacrylat und gleichzeitig das Monomer (a.2) oder zumindest ein Teil der Monomere (a.3) aus Ethylacrylat. Ganz besonders bevorzugt ist das Polymer aufgebaut aus (a.1) 40 bis 60 Gew.-% 2-Ethylhexylacrylat, (a.2) 60 bis 40 Gew.-% Ethylacrylat, (a.3) 0 bis 0,5 Gew.-% eines di- oder mehrfunktionellen Monomers, (b) 0 bis 5 Gew.-% eines ethylenisch ungesättigten Monomers mit einer Säure- oder Säureanhydridfunktion und/oder (a.4) 0 bis 5 Gew.-% eines ethylenisch ungesättigten Arylat-Monomers mit einer Säure- oder Säureanhydridfunktion.

Als Monomer (b) kommen vorteilhaft in Betracht zum Beispiel Itaconsäure, Maleinsäure, Fumarsäure und/oder Maleinsäureanhydrid und/oder als Monomere (a.4) 0 bis 5 Gew.-% eines ethylenisch ungesättigten Arcylat-Monomers mit einer Säure- oder Säureanhydridfunktion wie bevorzugt Acrylsäure, Methacrylsäure. Bevorzugt sind Acrylsäure oder Methacrylsäure, gegebenenfalls die Mischung aus beiden

Unter Monomere (a.2) fallen Alkyl(meth)acrylate, bevorzugt $C_1$- bis $C_{20}$-Alkyl(meth)acrylate, $C_1$- bis $C_{10}$-Hy-droxyalkyl(meth)acrylate wie insbesondere Hydroxyethyl- oder Hydroxypropyl(meth)acrylat, Säureamide wie Acrylamid oder Methacrylamid mit Ausnahme der (b) bildenden Monomere, aromatische Vinylmonomere wie Styrol, $\alpha$-Methylstyrol und Vinyltoluol, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, und ungesättigte Kohlenwasserstoffe mit 2 bis 8 Kohlenstoffatomen wie Ethylen, Propen, Butadien, Isopren, 1-Hexen oder 1-Octen. Erfindungsgemäß besonders bevorzugt ist Ethylacrylat.

Beispiele für mehrfunktionale ethylenisch ungesättigte Monomere (b) ist Divinylbenzol und als (a.4), Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat.

Die Polymerdispersion wird hergestellt durch das Verfahren der Emulsionspolymerisation der genannten Komponenten. Beschreibungen dieses Verfahrens werden zum Beispiel gegeben in "Emulsion Polymerization and Emulsion Polymers" von Peter A. Lovell and Mohamed S. El-Aasser - Wiley-VCH 1997 - ISBN 0-471-96746-7 oder in EP 1 378 527 B1.

Typische Acrylatdispersionen, wie sie erfindungsgemäß zum Einsatz kommen können, werden DE10 2011 075 156 A1, DE10 2011 075159 A1, DE10 2011 075 152 A1 und DE10 2011 075 160 A1 beschrieben und nachstehend näher erläutert.

Die Haftklebemasse besteht vorzugsweise aus einer wässrigen Acrylatdispersion, also einem in Wasser fein dispergierten Polyacrylsäureester mit Haftklebeeigenschaften, wie sie zum Beispiel im Handbook of Pressure Sensitive Technology von D. Satas beschrieben sind.

Acrylathaftklebemassen sind typischerweise radikalisch polymerisierte Copolymere aus Acrylsäurealkylestern oder Methacrylsäurealkylestern von $C_1$- bis $C_{20}$-Alkoholen wie zum Beispiel als Monomere a) Methylacrylat, Ethyl(meth) acrylat, n-Butyl(meth)acrylat, t-Butyl(meth)acrylat, Cyclohexyl(meth)acrylat, 2-Ethylhexyl(meth)acrylat, n-Octyl(meth) acrylat, iso-Octyl(meth)acrylat, n-Decyl(meth)acrylat, n-Dodecyl(meth)acrylat, Tetradecyl(meth)acrylat, Lauryl(meth) acrylat, Oleyl(meth)acrylat, Palmityl(meth)acrylat und Stearyl(meth)acrylat neben weiteren (Meth)acrylsäureestern wie Isobornyl(meth)acrylat, Benzyl(meth)acrylat, Phenyl(meth)acrylat und 2-Bromoethyl(meth)acrylat, Alkoxyalkyl(meth)acrylate wie Ethoxyethyl(meth)acrylat oder auch Säureamide wie Acrylamid oder Methacrylamid.

Weiterhin gehören zu den Comonomeren zur Herstellung der Acrylatdispersionen b) Ester von ethylenisch ungesättigten Di- und Tricarbonsäuren und Anhydriden, wie Ethylmaleat, Dimethylfumarat und Ethylmethylitaconat sowie auch vinylaromatische Monomere wie zum Beispiel Styrol, Vinyltoluol, Methylstyrol, n-Butylstyrol, Decylstyrol darunter. Zur Beeinflussung der physikalischen und optischen Eigenschaften der Haftklebemasse kommen mehrfunktionale ethylenisch ungesättigte Monomere b) als Vernetzermonomere in Frage bspw. Divinylbenzol.

Weitere mögliche Monomere (b) zur Erzielung der vorteilhaften Eigenschaften sind Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Nitrile wie Acrylnitril oder Methacrylnitril und ungesättigte Kohlenwasserstoffe mit 2 bis 8 Kohlenstoffatomen wie Ethylen, Propen, Butadien, Isopren, 1-Hexen oder 1-Octen.

Zur Beeinflussung der physikalischen und optischen Eigenschaften der Haftklebemasse kommen mehrfunktionale ethylenisch ungesättigte Acrylat-Monomere (a.4) in a) als Vernetzermonomere in Frage. Beispiele hierzu sind Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Unter die Gruppe dieser mehrfunktionellen Monomere fallen auch UV-vernetzbare Monomere wie zum Beispiel mit (Meth)acrylatfunktionalisierte Derivate des Benzophenons oder des Benzoins.

Eine weitere Gruppe von a) Acrylat-Monomeren sind solche, die ein latentes Vernetzungspotential im Polymer erzeugen und nach dem Eintrocknen der Klebemasse spontan (häufig katalysiert) zu einem Netzwerkaufbau führen. Ein solches Monomer ist zum Beispiel Glycidymethyacrylat, dessen Oxiranring mit Hydroxyl- oder insbesondere Carboxylatfunktionen unter Ringöffnung zu einer kovalenten Bindung führt. Diese Reaktion findet beschleunigt in Gegenwart von Zinkionen oder, besonders in Anwesenheit von Carboxylfunktionen und/oder Aminen statt.

Zur Erzielung haftklebriger Eigenschaften muss die Verarbeitungstemperatur der Klebmasse oberhalb ihrer Glasübergangstemperatur sein damit sie viskoelastische Eigenschaften besitzt.

Typische Teilchengrößen der erfindungsgemäßen dispergierten Polymers reichen von 20 nm bis zu 10 $\mu$m. Die Polymerdispersion wird hergestellt durch das Verfahren der Emulsionspolymerisation von Acrylat- und eventuell weiteren ethylenisch ungesättigten Monomeren. Beschreibungen dieses Verfahrens werden zum Beispiel gegeben in "Emulsion Polymerization and Emulsion Polymers" - Peter A. Lovell and Mohamed S. El-Aasser-Wiley-VCH 1997 - ISBN 0-471-96746-7 oder in EP 1 378 527 B1.

Die Scherviskositäten von kommerziellen Dispersionen liegen in der Regel unter denen des erfindungsgemäßen Verfahrens. Zur Erzielung der notwendigen Scherviskositäten werden im Regelfall Rheologieadditive, auch Verdicker genannt, eingesetzt.

Grundsätzlich unterscheidet man hier zwischen organischen und anorganischen Rheologieadditiven. Die organischen Verdicker spalten sich wiederum in zwei wesentliche Wirkprinzipien auf:

(i) die Verdickung der wässrigen Phase, also nicht assoziierend, und (ii) Assoziatbildung zwischen Verdickermolekül und Partikeln, zum Teil unter Einbeziehung der Stabilisatoren (Emulgatoren). Vertreter der ersten (i) Stoffgruppe sind wasserlösliche Polyacrylsäuren und Polycoacrylsäuren, die im basischen Medium Polyelektrolyte mit großem hydrodynamischem Volumen bilden. Der Fachmann bezeichnet diese auch kurz als ASE (alkali swellable emulsion). Sie zeichnen sich durch hohe Ruhescherviskositäten und starke Scherverdünnung aus. Eine andere Stoffklasse sind die modifizierten Polysaccharide, insbesondere Celluloseether wie Carboxymethylcellulose, 2-Hydroxyethylcellulose, Carboxymethyl-2-hydroxyethylcellulose, Methylcellulose, 2-Hydroxyethylmethylcellulose, 2-Hydroxyethylethylcellulose, 2-Hydroxypropylcellulose, 2-Hydroxypropylmethylcellulose, 2-Hydroxybutylmethylcellulose. Zusätzlich zählen zu dieser Stoffklasse weniger verbreitete Polysaccharide wie Stärkederivate und spezielle Polyether.

Die Wirkgruppe der (ii) Assoziativverdicker sind im Prinzip Blockcopolymere mit einem wasserlöslichen Mittelblock und hydrophoben Endblöcken, wobei die Endblöcke mit den Partikeln oder sich selbst wechselwirken und dadurch ein Raumnetz unter Einbeziehung der Partikel bilden. Typische Vertreter sind dem Fachmann als HASE (hydrophobically modified alkali swellable emulsion), HEUR (hydrophobically modified ethyleneoxide urethane) oder HMHEC (hydrophobically modified hydroxyethyl cellulose) geläufig. Bei den HASE-Verdickern ist der Mittelblock ein ASE, die Endblöcke sind zumeist über Polyethylenoxidbrücken angekoppelte lange, hydrophobe Alkylketten. Bei den HEUR ist der wasserlösliche Mittelblock ein Polyurethan, beim HMHEC eine 2-Hydroxyethylcellulose. Besonders die nicht-ionischen HEUR und HMHEC sind weitgehend pH unempfindlich.

Je nach Struktur bewirken die Assoziativverdicker mehr oder weniger ein newtonsches (scherratenunabhängiges) oder pseudoplastisches (scherverflüssigendes) Fließverhalten. Mitunter zeigen sie auch einen thixotropen Charakter, das heißt, sie zeigen neben einer Scherkraftabhängigkeit der Viskosität auch eine Zeitabhängigkeit.

Die anorganischen Verdicker sind zumeist Schichtsilikate natürlichen oder synthetischen Ursprungs, Beispiele sind Hektorite und Smektite. Im Kontakt mit Wasser lösen sich die einzelnen Schichten voneinander. Durch unterschiedliche Ladungen an Flächen und Rändern der Plättchen bilden sie in Ruhe eine raumerfüllende Kartenhausstruktur aus, woraus hohe Ruhescherviskositäten bis hin zu Fließgrenzen resultieren. Bei Scherung bricht die Kartenhausstruktur zusammen und es ist ein deutlicher Abfall der Scherviskosität zu beobachten. Je nach Ladung, Konzentration und geometrischen Dimensionen der Plättchen kann der Strukturaufbau einige Zeit in Anspruch nehmen, so dass mit solchen anorganischen Verdickern auch Thixotropie erzielt werden kann.

Die Verdicker lassen sich teilweise direkt in die Klebstoffdispersion einrühren oder werden teilweise zuvor vorteilhaft in Wasser vorverdünnt beziehungsweise vordispergiert. Typische Einsatzkonzentrationen sind 0,1 bis 5 Gew.-% bezogen auf die Feststoffe. Anbieter von Verdickern sind zum Beispiel OMG Borchers, Omya, Byk Chemie, Dow Chemical Company, Evonik, Rockwood oder Münzing Chemie.

Gemäß einer weiteren Ausführungsform können die polymeren Acrylatdispersionen Polymere umfassen, die aufgebaut sind aus :

(a.1) 40 bis 90 Gew.-% n-Butylacrylat und/oder 2-Ethylhexylacrylat
(b) 0 bis 10 Gew.-% eines ethylenisch ungesättigten Monomers mit einer Säure- oder Säureanhydridfunktion
(a.2) 60 bis 10 Gew.-% eines oder mehreren von (a.1) verschiedenen ethylenisch ungesättigten monofunktionellen Acrylat-Monomeren
(a.3) 0 bis 1 Gew.-% eines di- oder mehrfunktionellen Acrylat-Monomers und/oder als (a.4) 0 bis 5 Gew.-% eines ethylenisch ungesättigten Acrylat-Monomers mit einer Säure- oder Säureanhydridfunktion und die Haftklebemasse zwischen 15 und 100 Gewichtsteile eines Klebrigmachers (bezogen auf die Masse der getrockneten Polymerdispersion) enthält.

Bevorzugt bildet Ethylacrylat das Monomer (a.2) oder zumindest einen Teil der Monomere (a.2). Bevorzugt bildet das Monomer (a.1) 2-Ethylhexylacrylat. Gemäß einer weiteren bevorzugten Ausführungsform besteht das Monomer (a) aus 2-Ethylhexylacrylat und gleichzeitig das Monomer (a.2) oder zumindest ein Teil der Monomere (a.2) aus Ethylacrylat.

Ganz besonders bevorzugt ist das Polymer aufgebaut aus

(a.1) 40 bis 60 Gew.-% 2-Ethylhexylacrylat
(b) 0 bis 5 Gew.-% eines ethylenisch ungesättigten Monomers, insbesondere (b.1) 0 bis 5 Gew.-% eines ethylenisch ungesättigten Monomers mit einer Säure- oder Säureanhydridfunktion oder statt (b) als (a.4) 0 bis 5 Gew.-% eines ethylenisch ungesättigten Acrylat-Monomers mit einer Säure- oder Säureanhydridfunktion
(a.2) 60 bis 40 Gew.-% Ethylacrylat oder statt (a.2) ein (b.2) ethylenisch ungesättigten Monomer, das kein Acrylat ist,
(a.3) 0 bis 0,5 Gew.-% eines di- oder mehrfunktionellen Monomers

Als Monomer (b.2) aromatische Vinylmonomere wie Styrol, $\alpha$-Methylstyrol und Vinyltoluol, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid und ungesättigte Kohlenwasserstoffe mit 2 bis 8 Kohlenstoffatomen wie Ethylen, Propen, Butadien, Isopren, 1-Hexen oder 1-Octen.

Als Monomer (b.1) kommen vorteilhaft in Betracht zum Beispiel Divinylbenzol, Itaconsäure, Maleinsäure, Fumarsäure und/oder Maleinsäureanhydrid. Als Monomer (a.4) kommen vorteilhaft in Betracht zum Beispiel Acrylsäure, Methacrylsäure. Bevorzugt sind Acrylsäure oder Methacrylsäure, gegebenenfalls die Mischung aus beiden.

Unter Monomere (a.2) fallen Alkyl(meth)acrylate, bevorzugt $C_1$- bis $C_{20}$-Alkyl(meth)acrylate, $C_1$- bis $C_{10}$-Hydroxyalkyl(meth)acrylate wie insbesondere Hydroxyethyl- oder Hydroxypropyl(meth)acrylat, Säureamide wie Acrylamid oder Methacrylamid mit Ausnahme der (b) bildenden Monomere, aromatische Vinylmonomere wie Styrol, $\alpha$-Methylstyrol und Vinyltoluol, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid und ungesättigte Kohlenwasserstoffe mit 2 bis 8 Kohlenstoffatomen wie Ethylen, Propen, Butadien, Isopren, 1-Hexen oder 1-Octen. Erfindungsgemäß besonders bevorzugt ist Ethylacrylat.

Beispiele für mehrfunktionale ethylenisch ungesättigte Monomere (a.3) sind Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat.

Zur Erzielung haftklebriger Eigenschaften muss sich die Klebmasse bei der Verarbeitungstemperatur oberhalb ihrer Glastemperatur befinden, um viskoelastische Eigenschaften zu haben. Da die Kabelsatzwicklung bei normaler Umgebungstemperatur (ungefähr zwischen 15 °C bis 25 °C) erfolgt, liegt die Glasübergangstemperatur der Haftklebemasseformulierung (Polymer-Klebrigmachermischung) bevorzugt unterhalb von +15 °C (ermittelt mit DSC (Differential Scanning Calorimetry) gemäß DIN 53 765 bei einer Aufheizrate von 10 K/min).

Eine weitere besonders bevorzugte Ausführungsform der Erfindung umfasst also eine Mischung aus 2-Ethyl-

hexylacrylat als Monomer (a) sowie Ethylacrylat als Monomer (a.2) und Terpenphenolen und/oder Kolophoniumestern mit einem Erweichungspunkt oberhalb von 90 °C gemäß ASTM E28-99 (2009).

Besonders bevorzugte Zusammensetzung umfassen beispielsweise: Polymer 1 : 50 Gew.-% 2-Ethylhexylacrylat, 2 Gew.-% Acrylsäure, 48 Gew.-% Ethylacrylat; Polymer 2: 81 Gew.-% 2-Ethylhexylacrylat, 1 Gew.-% Acrylsäure, 18 Gew.-% Methylacrylat; Polymer 3: 84 Gew.-% Butylacrylat, 1 Gew.-% Acrylsäure, 8 Gew.-% Methylacrylat, 7 Gew.-% Vinylacrylat. Aus Polymer 1 wurden die aufgeführten Haftklebemassen durch Abmischen mit Klebharzdispersionen formuliert. Dabei gibt die Zahl die Gewichtsteile an Klebrigmacher bezogen auf 100 Gewichtsteile Polymer 1 an (jeweils bezogen auf Feststoffe). Beispielhafte Masseformulierungen aus Polymer 1 werden hergestellt: B1 mit 45 Teilen Kolophoniumesterharz Snowtack 100G, Lawter, B2 mit 40 Teilen Kolophoniumesterharz Snowtack 780 G, Lawter, B3 mit 35 Teilen Terpenphenolharz Dermulsene TR 602, DRT, B4 aus Polymere 2 und B5 aus Polymer 3, jeweils abgemischt mit 40 Gewichtsteilen des Kolophoniumesterharzes Snowtack 100G mit einem Erweichungspunkt von 99 °C.

Gemäß einer weiteren Ausführungsform umfasst die polymere Acrylatdispersion Polymere aus: (a.1) 90 bis 99 Gew.-% n-Butylacrylat und/oder 2-Ethylhexylacrylat,

(b) 0 bis 10 Gew.-% eines ethylenisch ungesättigten Monomers, insbesondere 0 bis 10 Gew.-% eines ethylenisch ungesättigten Monomers mit einer Säure- oder Säureanhydridfunktion, oder statt (b) als (a.4) 0 bis 5 Gew.-% eines ethylenisch ungesättigten Acrylat-Monomers mit einer Säure- oder Säureanhydridfunktion

(a.2) 10 bis 1 Gew.-% eines oder mehreren von (a.1) verschiedenen ethylenisch ungesättigten monofunktionellen Acrylat-Monomeren oder statt (a.2) ein (b.2) ethylenisch ungesättigten Monomer, das kein Acrylat ist,

(a.3) 0 bis 1 Gew.-% eines di- oder mehrfunktionellen Acrylat-Monomers

und die Haftklebemasse zwischen 15 und 100 Gewichtsteile eines Klebrigmachers (bezogen auf die Masse der getrockneten Polymerdispersion).

Bevorzugt bilden 10 bis 1 Gew.-% Acrylnitril und/oder Methacrylnitril das Monomer (b.2) oder zumindest einen Teil der Monomere (b.2), besonders bevorzugt Acrylnitril. Bevorzugt bildet 2-Ethylhexylacrylat Monomer (a.1).

Gemäß einer weiteren bevorzugten Ausführungsform besteht das Monomer (a.1) aus 2-Ethylhexylacrylat und gleichzeitig das Monomer (b.2) oder zumindest ein Teil der Monomere (b.2) aus Acrylnitril und/oder Methacrylnitril, vorzugsweise aus Acrylnitril. Eine besonders bevorzugte Ausführungsform der Erfindung umfasst also eine Mischung aus 2-Ethylhexylacrylat als Monomer (a) und Acrylnitril als Monomer (b.2).

Als Monomer (a.4) kommen vorteilhaft in Betracht zum Beispiel Acrylsäure, Methacrylsäure. Bevorzugt sind Acrylsäure oder Methacrylsäure, gegebenenfalls die Mischung aus beiden. Alternativ kommt als Monomer (b) kommen vorteilhaft in Betracht zum Beispiel Itaconsäure, Maleinsäure, Fumarsäure und/oder Maleinsäureanhydrid.

Unter Monomere (a.2) fallen Alkyl(meth)acrylate, bevorzugt $C_1$- bis $C_{20}$-Alkyl(meth)acrylate mit Ausnahme der (a.1) bildenden Monomere, $C_1$- bis $C_{10}$-Hydroxyalkyl(meth)acrylate wie insbesondere Hydroxyethyl- oder Hydroxypropyl (meth)acrylat, Säureamide wie Acrylamid oder Methacrylamid. Erfindungsgemäß besonders bevorzugt ist Acrylnitril.

Unter Monomere (b.2) fallen zudem aromatische Vinylmonomere wie Styrol, $\alpha$-Methylstyrol und Vinyltoluol, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid und ungesättigte Kohlenwasserstoffe mit 2 bis 8 Kohlenstoffatomen wie Ethylen, Propen, Butadien, Isopren, 1-Hexen oder 1-Octen, Acrylnitril und Methacrylnitril.

Beispiele für mehrfunktionale ethylenisch ungesättigte Monomere (a.3) sind, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Alternativ als (b) 0 bis 1 Gew.-% Divinylbenzol.

Beispielhafte Zusammensetzung der Polymerdispersionen sind: Polymer 1: 93 Gew.-% 2-Ethylhexylacrylat, 4 Gew.-% Acrylsäure, 3 Gew.-% Acrylnitril; Polymer 2: 92 Gew.-% 2-Ethylhexylacrylat, 2 Gew.-% Acrylsäure, 6 Gew.-% Methylmethacrylat; Polymer 3: 95 Gew.-% Butylacrylat, 1 Gew.-% Acrylsäure, 4 Gew.-% Vinylacetat. Aus Polymer 1 wurden die in Tabelle 1 aufgeführten Haftklebemassen durch Abmischen mit Klebharzdispersionen formuliert. B1 mit 45 Teilen, Kolophoniumesterharz Snowtack 100G, Lawter; B2 mit 40 Teilen Kolophoniumesterharz Snowtack 780 G, Lawter, B3 mit 35 Teilen Terpenphenolharz. Als Beispiele B4 und B5 dienen die Polymere 2 und 3, jeweils abgemischt mit 40 Gewichtsteilen des Kolophoniumesterharzes Snowtack 100G mit einem Erweichungspunkt von 99 °C.

Entsprechend einer weiteren Ausführungsform umfassen die Acrylatdispersionen Polymere aus:

(b.1) 5 bis 25 Gew.-%, vorzugsweise 10 bis 22 Gew.-% Ethylen

(a.1) 30 bis 69 Gew.-%, vorzugsweise 40 bis 60 Gew.-% Alkylacrylester mit $C_4$- bis $C_{12}$-Alkylresten

(b.3) 20 bis 55 Gew.-%, vorzugsweise 28 bis 38 Gew.-% Vinylacetat

(a.2) 0 bis 10 Gew.-% andere ethylenisch ungesättigte Verbindungen oder statt (a.2) ein (b.2) ethylenisch ungesättigten Monomer, das kein Acrylat ist,

und die Haftklebemasse zwischen 15 und 100 Gewichtsteile eines Klebrigmachers (bezogen auf die Masse der getrockneten Polymerdispersion).

Bevorzugt handelt es sich bei dem Monomer (a.1) um n-Butylacrylat und/oder 2-Ethylhexylacrylat.

Unter Monomere (a.2) fallen Alkyl(meth)acrylate, bevorzugt $C_1$- bis $C_{20}$-Alkyl(meth)acrylate, $C_1$- bis $C_{10}$-Hydroxyalkyl(meth)acrylate wie insbesondere Hydroxyethyl- oder Hydroxypropyl(meth)acrylat, Säureamide wie Acrylamid und/oder Methacrylamid.

Unter Monomere (b.2) fallen (b) bildenden Monomere, wie aromatische Vinylmonomere wie Divinylbenzol, Styrol, $\alpha$-Methylstyrol und Vinyltoluol, Vinylester aus bis zu 20 Kohlenstoffatomen enthaltenden Carbonsäuren wie Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid und ungesättigte Kohlenwasserstoffe mit 3 bis 8 Kohlenstoffatomen wie Propen, Butadien, Isopren, 1-Hexen oder 1-Octen oder deren Mischungen. Wobei Divinylbenzol zu 0 bis 1 Gew.-% zugesetzt werden kann.

Darüber hinaus können dem Polymer als Monomer (a.3) vorteilhafterweise ein di- oder mehrfunktionelles Monomer zugesetzt sein, und zwar vorzugsweise zu 0 bis 2 Gew.-% und besonders vorzugsweise zu 0 bis 1 Gew.-%. Beispiele für mehrfunktionale ethylenisch ungesättigte Acrylat-Monomere Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat.

Die Polymerdispersion wird hergestellt durch das Verfahren der Emulsionspolymerisation der genannten Komponenten. Besonders bevorzugte Ausführungsformen und ausführliche Beschreibungen der Einsatzstoffe sowie der Herstellungsverfahren findet man in EP 0 017 986 B1 sowie EP 0 185 356 B1.

Zusammensetzung weiterer Beispielpolymerdispersion: Die Beispielpolymerdispersion wurde gemäß Beispiel 1 der EP 0 017 986 B1 hergestellt und enthielt dementsprechend 46,7 Gew.-% 2-Ethylhexylacrylat, 31,1 Gew.-% Vinylacetat, 18 Gew.-% Ethylen, 2,6 Gew.-% Acrylamid und 1,6 Gew.-% Acrylsäure. Aus dieser Polymerdispersion wurden Haftklebemassen formuliert. B1 mit 45 Teilen Kolophoniumesterharz Snowtack 100G, Lawter, B2 mit 40 Teilen Kolophoniumesterharz Snowtack 780 G, Lawter, B3 mit 35 Teilen Terpenphenolharz Dermulsene TR 602, DRT.

Zur Erzielung haftklebriger Eigenschaften muss sich die Haftklebmasse bei der Verarbeitungstemperatur oberhalb ihrer Glastemperatur befinden, um viskoelastische Eigenschaften zu haben. Da die Kabelsatzwicklung bei normaler Umgebungstemperatur (ungefähr zwischen 15 °C bis 25 °C) erfolgt, liegt die Glasübergangstemperatur der Haftklebemasse (Acrylatdispersion mit Klebrigmachermischung) bevorzugt unterhalb von +15 °C (ermittelt mit DSC (Differential Scanning Calorimetry) gemäß DIN 53 765 bei einer Aufheizrate von 10 K/min).

Die Glasübergangstemperatur der Acrylatcopolymere lässt sich gemäß der Gleichung von Fox aus den Glasübergangstemperaturen der Homopolymere und ihren relativen Mengenverhältnissen abschätzen (vgl. T.G. Fox, Bull. Am. Phys. Soc. 1 (1956) 123). Durch die Klebrigmacher erhöht sich die Glasübergangstemperatur zwangsläufig, je nach Zugabemenge, Verträglichkeit und Erweichungstemperatur um ca. 5 bis 40 K. Es sind demnach nur Acrylatcopolymere mit einer Glasübergangstemperatur von höchstens 0 °C geeignet.

Beim Wickeln eines Kabelsatzes wird das Klebeband von gar nicht bis vollständig überlappend um das Kabel verklebt, das im Regelfall einen kleinen Radius hat, so dass das Klebeband sehr stark gekrümmt wird. Am Ende eines Wickelabschnittes wird üblicherweise das Band vorwiegend auf die eigene Rückseite gewickelt, so dass der Überlappungsgrad nahezu vollständig ist, ähnlich der üblichen Darreichungsform als Klebebandrolle, wo die Haftklebemasse ebenfalls auf der eigenen Rückseite verklebt ist. Beim Abflaggen wirken statische Kräfte wie zum Beispiel durch die Biegesteifigkeit des Trägers und die Wickelspannung, die dazu führen können, dass sich die offenen Klebebandenden in unerwünschter Weise aufstellen, ähnlich einer beginnenden selbsttätigen Abwicklung. Die Abflaggresistenz ist also die Fähigkeit der Haftklebemasse, dieser statischen Kraft zu widerstehen. Die Acrylatdispersion allein erfüllt die Anforderungen an ein Klebeband zum Umwickeln von Kabeln nicht. Insbesondere die geforderte Abflaggresistenz ist nicht ausreichend.

Der Einsatz von Klebrigmachern zur Steigerung der Klebkräfte von Haftklebemassen ist grundsätzlich bekannt. Daher tragen die zugesetzten Klebrigmacher auch zur verbesserten Abflaggresistenz in gewissem Maße bei. Der erfindungsgemäßen Haftklebemasse werden größer gleich 15 bis 100 Gewichtsteile Klebrigmacher (bezogen auf die Masse der getrockneten polymeren Dispersion) hinzugefügt wird, zumeist 20 bis 80 Gewichtsteile, weiter bevorzugt 30 bis 50 Gewichtsteile.

Für den Fachmann überraschend und nicht vorhersehbar führt der Einsatz von Klebharzen beim erfindungsgemäßen Klebeband nicht gleichzeitig zu einer schwierigen Abwickelbarkeit, obwohl beiden Anforderungen gemein ist, dass die Haftklebemasse Kontakt zur eigenen Rückseite hat.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter $C_5$- oder $C_9$-Monomere), Terpenphenolharze, Polyterpenharze auf Basis von Rohstoffen wie zum Beispiel $\alpha$- oder ß-Pinen, aromatische Harze wie Cumaron-Inden-Harze oder Harze auf Basis Styrol oder $\alpha$-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze. Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen. Besonders bevorzugt werden Kolophoniumesterherze als Klebrigmacher zugesetzt.

Eine besonders bevorzugte Ausführungsform der Erfindung umfasst also eine Haftklebemasse umfassend eine Acrlyatdispersion aus 2-Ethylhexylacrylat (Monomer a.1) sowie Ethylacrylat (Monomer a.2) und Terpenphenolen und/oder Kolophoniumestern mit einem Erweichungspunkt oberhalb von 90 °C gemäß ASTM E28-99 (2009).

Zur weiteren Verbesserung der Kabelverträglichkeit kann die Klebmasseformulierung optional mit Lichtschutz- oder primären und/oder sekundären Alterungsschutzmitteln abgemischt sein. Als Alterungsschutzmittel können Produkte auf Basis sterisch gehinderter Phenole, Phosphite, Thiosynergisten, sterisch gehinderter Amine oder UV-Absorber eingesetzt werden. Bevorzugt eingesetzt werden primäre Antioxidantien wie zum Beispiel Irganox 1010 oder Irganox 254, allein oder in Kombination mit sekundären Antioxidantien wie zum Beispiel Irgafos TNPP oder Irgafos 168. Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta- Stellung zur OH-Gruppe mit Thioalkylketten substituiert ist, wobei das Schwefelaton auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Die Menge des zugesetzten Alterungsschutzmittels bzw. Alterungsschutzmittelpaketes sollte in einem Bereich zwischen 0,1 und 10 Gew.-%, bevorzugt in einem Bereich zwischen 0,2 und 5 Gew.-%, besonders bevorzugt in einem Bereich zwischen 0,5 und 3 Gew.-% bezogen auf den Gesamtfeststoffgehalt liegen.

Bevorzugt ist die Darreichungsform in Form einer Dispersion zur besonders einfachen Mischbarkeit mit der Klebmassedispersion. Alternativ können flüssige Alterungsschutzmittel auch direkt in die Dispersion eingearbeitet werden, wobei sich an den Einarbeitungsschritt noch eine Standzeit über einige Stunden anschließen sollte, um die homogene Verteilung in der Dispersion oder die Aufnahme des Alterungsschutzmittels in die Dispersionspartikel zu ermöglichen. Eine weitere Alternative ist die Zugabe einer organischen Lösung der Alterungsschutzmittel in die Dispersion. Geeignete Konzentrationen liegen im Bereich von 0,1 bis zu 5 Gewichtsteilen bezogen auf die Feststoffe.

Zur Verbesserung der Verarbeitungseigenschaften können der Haftklebemasse zur Formulierung weitere übliche Prozesshilfsmitteln wie Rheologieadditiven (Verdicker), Entschäumern, Entlüftern, Netzmitteln oder Verlaufsmitteln zugemischt werden. Geeignete Konzentrationen liegen im Bereich von 0,1 bis zu 5 Gewichtsteilen bezogen auf die Feststoffe.

Füllstoffe (verstärkend oder nicht verstärkend) wie Siliciumdioxide (sphärisch, nadelförmig, plättchenförmig oder unregelmäßig wie die pyrogenen Silicas), Glas als Voll- oder Hohlkugeln, Mikroballons, Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf die Feststoffe.

Gemäß bevorzugten Ausführungsformen weist die erfindungsgemäße Haftklebemasse nach ASTM D3330 eine Klebkraft auf Stahl von größer gleich 5,1 N/cm bei einem Flächengewicht der Haftklebemasse von kleiner 100 $g/m^2$ auf, vorzugsweise auf einem PET-Gewebe als Träger, besonders bevorzugt mit den genannten Flächengewichten des Gewebes, besonders bevorzugt weißt die Haftklebemasse eine Klebkraft von größer gleich bzw. mindestens 5,6 N/cm auf (bei einem Flächengewicht der Haftklebemasse von kleiner gleich 90 $g/m^2$ auf Polyestergewebe als Träger, vorzugsweise auch bereits bei kleiner gleich 80 $g/m^2$, besonders bevorzugt bei kleiner gleich 70 $g/m^2$ auf Polyestergewebe als Träger).

Erfindungsgemäß bevorzugt ist der Träger ein textiler Träger, bevorzugt ein Gewebe, insbesondere ein Polyestergewebe, ein Vlies oder Gewirk, dabei ist es weiter bevorzugt, wenn der Träger ein Flächengewicht von 30 bis 250 g/m², vorzugsweise von 50 bis 200 g/m², besonders bevorzugt von 60 bis 150 g/m² aufweist.

Als Träger können alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.
Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Techtex GmbH beziehbar. Ein Malivlies ist dadurch gekennzeichnet, dass ein Querfaservlies durch die Bildung von Maschen aus Fasern des Vlieses verfestigt wird. Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehende Fasern miteinander verbunden. Die zusätzliche Einbringbarkeit weiterer durchstechbarer Flächengebilde und/oder streufähiger Medien ist gegeben. Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer, bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder  meist Dispersionen von Thermoplasten wie Acrylate, Vinyl acetate, Polyurethane, StyrolButadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern. Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden. Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders  günstigen Foggingwerten produziert werden kann, ebenso zeigt somit auch der Träger einen sehr geringen Foggingwert.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie)Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden. Des Weiteren sind Garne, gefertigt aus den vorgenannten Fasermaterialien, ebenfalls geeignet.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Die Kettfäden und/oder die Schussfäden können dabei jeweils nur aus synthetischen Fäden oder aus Fäden aus natürlichen Rohstoffe bestehen.

Bevorzugt wird als Material für den Träger Polyester aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester die Vorteile, dass es zu einem sehr abriebfesten und temperaturbeständigen Träger führt, was für den speziellen Einsatzzweck zur Bündelung von Kabeln in Automobilen und beispielsweise im Motorraum von besonderer Wichtigkeit ist.

Zur Ummantelung des langgestreckten Gutes eignet sich auch ein Träger, der aus Papier, aus einem Laminat, aus einer Folie (zum Beispiel PP, PE, PET, PA, PU), aus Schaumstoff oder aus einer geschäumten Folie besteht.

Diese nicht-textilen flächigen Materialien bieten sich insbesondere dann an, wenn spezielle Anforderungen eine derartige Modifikation der Erfindung erfordern. Folien sind zum Beispiel im Vergleich zu Textilien meist dünner, bieten durch die geschlossene Schicht zusätzlichen Schutz vor dem Eindringen von Chemikalien und Betriebsmitteln wie Öl, Benzin, Frostschutzmittel u.ä. in den eigentlichen Kabelbereich und lassen sich über geeignete Auswahl des Werkstoffes den Anforderungen weitgehend anpassen: mit Polyurethanen, Copolymeren aus Polyolefinen lassen sich beispielsweise flexible und elastische Ummantelungen erzeugen, mit Polyester und Polyamiden werden gute Abrieb- und Temperaturbeständigkeiten erreicht.

Schaumstoffe oder geschäumte Folien beinhalten dagegen die Eigenschaft der größeren Raumerfüllung sowie guter Geräuschdämpfung - wird ein Kabelstrang beispielsweise in einem kanal- oder tunnelartigen Bereich im Fahrzeug verlegt, kann durch ein in Dicke und Dämpfung geeignetes Ummantelungsband störendes Klappern und Vibrieren von vornherein unterbunden werden.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien. Bevorzugt wird ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Besonders vorteilhafte Ausführungsformen der Erfindung umfassen folgende Klebebandvarianten:

Variante A

- Trägermaterial:

  Gewebe mit einem Flächengewicht von 100 bis 200 g/m$^2$ und mit einer Luftdurchlässigkeit (es wird der Luftstrom angegeben) von unter 80 l/m$^2$/s, vorzugsweise unter 60 l/m$^2$/s (gemessen nach der DIN EN ISO 9237 (Prüffläche 20 cm$^2$, verwendete Druckdifferenz 200 Pa, Prüfklima von 23 $\pm$ 1 °C und 50 $\pm$ 5 % rel. Luftfeuchte)

- Klebemasse:

  Haftklebemasse in Form einer getrockneten und Elektronenstrahl (ESH) vernetzten polymeren Acrylatdispersion mit einem Flächengewicht von 60 bis 120 g/m$^2$, wobei die Dosis zur Vernetzung zwischen 30 bis 50 kGy ist.
  Die Scherviskosität der Haftklebemasse beträgt bei einer Temperatur von 25 °C während der Beschichtung aus Dispersion 200 bis 100.000 Pa*s bei einer Schergeschwindigkeit von 10$^{-2}$ s$^{-1}$ und 0,1 bis 10 Pa*s bei einer Schergeschwindigkeit von 100 s$^{-1}$.

- Klebeband
  Biegesteifigkeit in MD (machine direction) von kleiner gleich 25 mN/60 mm (gemessen mit einem Messgerät Softometer KWS basic 2000 mN der Fa. Wolf Messtechnik GmbH)

Variante B

- Trägermaterial:

  Gewebe mit einem Flächengewicht von 50 bis 100 g/m$^2$ und mit einer Luftdurchlässigkeit (es wird der Luftstrom angegeben) von unter 80 l/m$^2$/s, vorzugsweise unter 60 l/m$^2$/s (gemessen nach der DIN EN ISO 9237 (Prüffläche 20 cm$^2$, verwendete Druckdifferenz 200 Pa, Prüfklima von 23 $\pm$ 1 °C und 50 $\pm$ 5 % rel. Luftfeuchte)

- Klebemasse:

  Haftklebemasse in Form einer getrockneten und Elektronenstrahl (ESH) vernetzten polymeren Acrylatdispersion mit einem Flächengewicht von 50 bis 100 g/m$^2$, wobei die Dosis zur Vernetzung zwischen 5 bis 25 kGy ist.

Die Scherviskosität der Haftklebemasse beträgt bei einer Temperatur von 25 °C während der Beschichtung aus Dispersion 200 bis 100.000 Pa*s bei einer Schergeschwindigkeit von $10^{-2}$ s$^{-1}$ und 0,1 bis 10 Pa*s bei einer Schergeschwindigkeit von 100 s$^{-1}$.

- Klebeband
  Biegesteifigkeit in MD (machine direction) von kleiner gleich 15 mN/60 mm (gemessen mit einem Messgerät Softometer KWS basic 2000 mN der Fa. Wolf Messtechnik GmbH)

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann in Form einer Rolle, also in Form einer archimedischen Spirale auf sich selbst aufgerollt, hergestellt werden. Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkenden Stoffen bzw. zur Antihaftbeschichtung ausgerüstet sein.

Die Klebemasse kann in Längsrichtung des Klebebands in Form eines Streifens aufgebracht sein, der eine geringere Breite aufweist als der Träger des Klebebands.

Je nach Verwendungsfall können auch mehrere parallele Streifen des Klebers auf dem Trägermaterial beschichtet sein. Die Lage des Streifens auf dem Träger ist frei wählbar, wobei eine Anordnung direkt an einer der Kanten des Trägers bevorzugt wird.

Bevorzugt ist die Klebemasse vollflächig auf dem Träger aufgetragen.

Auf der Klebebeschichtung des Trägers kann zumindest ein Streifen einer Eindeckung vorgesehen sein, der oder die sich in Längsrichtung des Klebebands erstrecken und der oder die zwischen 20 % und 90 % der Klebebeschichtung abdecken. Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes. Die angegebenen Prozentzahlen beziehen sich auf die Breite der Streifen der Eindeckung in Bezug auf die Breite des Trägers.

Gemäß einer bevorzugten Ausführungsform der Erfindung ist genau ein Streifen der Eindeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt. Wird das Klebeband zur Ummantelung eines Kabelbaums eingesetzt, indem das Klebeband in einer schraubenlinienförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt. Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird. Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.

Für das sichere und wirtschaftliche Aufbringen des Klebebands in besagter schraubenlinienförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist. Daneben gibt es Ausführungsformen, bei denen mehr als ein Streifen der Eindeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Gleichfalls Gegenstand der Erfindung ist ein Verfahren zur Herstellung eines Klebebandes, insbesondere zum Umwickeln von Kabeln, aus einem textilen Träger und einer auf mindestens einer Seite des Trägers aufgebrachten Haftklebemasse, sowie ein Klebeband erhältlich nach diesem Verfahren, indem die Haftklebemasse

- auf mindestens einer Seite des textilen Träger aufgebracht wird,
- optional wird die Haftklebemasse getrocknet,
- die Haftklebemasse wird mit Elektronenstrahlen vernetzt, wobei vorzugsweise der Träger auf der Elektronenstrahlenquelle abgewandten Seite der Haftklebemasse angeordnet ist, insbesondere erfolgt die die Elektronenstrahl-Vernetzung (ESH) mit 0,001 bis 80 kGy, vorzugsweise mit 5 bis 80 kGy, besonders bevorzugt mit 10 bis 50 kGy, je nach Haftklebemasse erfolgt die Vernetzung mit 5 bis 20 kGy oder alternativ mit 20 bis 50 kGy, weiter bevorzugt wird die dem TrägerMaterial abgewandte Seite der Haftklebemasse mit Elektronenstrahlen (ESH) bestrahlt, insbesondere beträgt die Dosis 5 bis 50 kGy, insbesondere 5 bis 45 kGy, je nach Haftklebemasse 5 bis 20 kGy oder alternativ 20 bis 50 kGy,

wobei die Haftklebemasse eine polymere Acrylatdispersion umfasst und zwischen 15 und 100 Gewichtsteile eines Klebrigmachers (bezogen auf die Masse der getrockneten polymeren Dispersion) enthält.

Erfindungsgemäß wird die Haftklebemasse unmittelbar mit Elektronenstrahlen vernetzt, so dass die Haftklebemasse nicht durch die Trägerseite mittels Elektronenstrahlen vernetzt wird, sondern die Elektronenstrahlquelle direkt der nicht abgedeckten Haftklebemasse zugewandt ist.

Als Träger kommen die vorgenannten Träger in Frage, vorzugsweise wird ein flächiger textiler Träger verwendet, bevorzugt ein Gewebe, wie ein Polyestergewebe, ein Vlies oder ein Gewirk, wobei deren Flächengewicht vorzugsweise von 30 bis 250 g/m², vorzugsweise 50 bis 200 g/m², weiter vorzugsweise 60 bis 150 g/m² reicht.

In der Haftklebemasse wird erfindungsgemäß eine Acrylatdispersion eingesetzt, die vorzugsweise eine wässrige Acrylatdispersion ist, insbesondere eine durch das Verfahren der Emulsionspolymerisation hergestellte Acrylatdispersion, basierend auf den vorstehend genannten Monomeren und Comonomeren, wie vorstehend beschrieben. Zusätzlich können der Haftklebemasse Rheologieadditive zugesetzt werden.

Wie vorstehend erläutert, können der Haftklebemasse zudem als Klebrigmacher Klebharze mit einem Erweichungspunkt oberhalb von 80 °C gemäß ASTM E28-99 (2009), bevorzugt Harze auf Basis von Terpenphenolen und/oder Kolophoniumestern mit einem Erweichungspunkt oberhalb von 90 °C gemäß ASTM E28-99 (2009) eingesetzt werden.

Der Herstellprozess des erfindungsgemäßen Klebebandes umfasst die Beschichtung des Trägers direkt mit der Haftklebemasse in einem oder mehreren nacheinander durchgeführten Arbeitsgängen. Im Falle von textilen Trägern kann das unbehandelte Textil direkt oder im Transferverfahren beschichtet werden. Alternativ kann das Textil mit einer Beschichtung bzw. Imprägnierung vorbehandelt werden (mit beliebigem filmbildendem Stoff aus Lösung, Dispersion, Schmelze und/oder strahlenhärtend), um dann in einem nachgeschalteten Arbeitsschritt direkt oder im Transferverfahren mit der Haftklebemasse versehen zu werden. Als Auftragsaggregate werden die üblichen eingesetzt: Drahtrakel, Streichbalken, Walzenauftrag, Düsenbeschichtung, Doppelkammerrakel, Mehrfachkaskadendüse.

Ebenfalls Gegenstand der Erfindung ist ein Klebeband, das eine mit Elektronenstrahlen (ESH) vernetze Haftklebemasse aufweist, die eine Acrylatdispersion und einen Klebrigmacher umfasst, wobei das Klebeband einen TFT-Wert von größer gleich 1500 Minuten aufweist, vorzugsweise größer gleich 2000 Minuten. Dieses Klebeband kann zwischen Träger und Haftklebemasse mit einer Imprägnierschicht, insbesondere basierend auf einer Acrylatdispersion, ausgerüstet sein.

Ein weiterer Gegenstand der Erfindung ist die Verwendung von Elektronenstrahlen zur Vernetzung von Haftklebemassen umfassend Acrylatdispersionen auf Trägern von Klebebändern, insbesondere von Klebebändern, die zum Umwickeln von Kabeln geeignet sind, insbesondere sind die Verwendung zum Umwickeln von Kabeln im Automotivbereich, wie Kabelsätzen in Kraftfahrzeugen, sowie generell von Kabeln, die besonderen Einflüssen wie Hitze und/oder Feuchte ausgesetzt sind, wie von Kabeln, die in Windkraftanlagen bspw. Offshore Windparks etc. verbaut werden. Somit ist auch ein Gegenstand der Erfindung die Verwendung von Elektronenstrahl (ESH) vernetzten Klebebändern gemäß der Erfindung, hergestellt nach dem erfindungsgemäßen Verfahren zum Umwickeln von Kabeln, insbesondere von Kabeln die erhöhter Temperatur und/oder Feuchte ausgesetzt sind. Aufgrund der geschilderten positiven Eigenschaften lässt sich das Klebeband hervorragend zum Isolieren und Wickeln von Drähten oder Kabeln verwenden.

Auch Gegenstand der Erfindung ist die Verwendung eines erfindungsgemäßen Klebebandes oder erfindungsgemäß hergestellten Klebebandes zum Ummanteln von langgestrecktem Gut, wobei das Klebeband in einer Schraubenlinie um das langgestreckte Gut geführt wird, insbesondere wird das langgestreckte Gut in axialer Richtung von dem Band umhüllt. Zusätzlich ist Gegenstand der Erfindung ein langgestrecktes Gut, wie insbesondere ein Kabelsatz, ummantelt mit einem erfindungsgemäßen Klebeband.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich. Ein derartiges Produkt sowie optimierte Ausführungsformen desselben werden in der EP 1 312 097 A1 offenbart. In der EP 1 300 452 A2, der DE 102 29 527 A1 sowie der WO 2006/108871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart. Schließlich beschreiben die EP 1 315 781 A1 sowie die DE 103 29 994 A1 Ausführungsformen von Klebebändern, wie sie auch für das erfindungsgemäße Klebeband möglich sind.

Weiter vorzugsweise zerstört das Klebeband bei Verklebung auf Kabeln mit PVC-Ummantelung und auf Kabeln mit Polyolefin-Ummantelung die selbigen nicht, wenn ein Verbund aus Kabeln und Klebeband gemäß der LV 312 bei Temperaturen über 100 °C und bis zu 3000 h gelagert und anschließend die Kabel um einen Dorn gebogen werden. Das erfindungsgemäße Klebeband eignet sich hervorragend für das Umwickeln von Kabeln, lässt sich für eine einfache Verarbeitung leicht abwickeln, zeigt kein oder nur geringfügiges Abflaggen und zeigt keine Kabelversprödung auch bei den hohen Temperaturklassen T3 und T4 über 3000 h.

Im Folgenden soll das Klebeband anhand mehrerer Figuren beispielhaft näher erläutert werden, ohne die Erfindung auf diese Ausführungsformen zu beschränken.

Es zeigen:

Figur 1      das Klebeband im seitlichen Schnitt,
Figur 2      einen Ausschnitt eines Kabelbaums, der sich aus einer Bündelung von einzelnen Kabeln zusammensetzt und der mit dem erfindungsgemäßen Klebeband ummantelt ist, und
Figur 3      eine vorteilhafte Anwendung des Klebebands.
Figur 4-7    Messung Abflaggresistenz nach LV 312 bzw. nach TFT-Methode
Figur 8      Abhängigkeit der Klebkraft von der Vernetzung, Verlauf Klebkraft (N/cm) vs RSH-Dosis (kGy), Beispiel 1
Figur 9      Abhängigkeit der der TFT-Zeit von der Vernetzung in Klebkraft (N/cm) vs. EH-Dosis (kGy)
Figur 10     Zusammenspiel von Kohäsion und Adhäsion beim Ablösen der Bandenendes
Figur 11     Einfluss ESH-Vernetzung auf die Viskosität (gemessen nach DMA-Methode)
Figur 12     Frequenzsweep 25 °C vs tan delta
Figur 13     Einfluss ESH-Vernetzung auf den Glasübergangspunkt

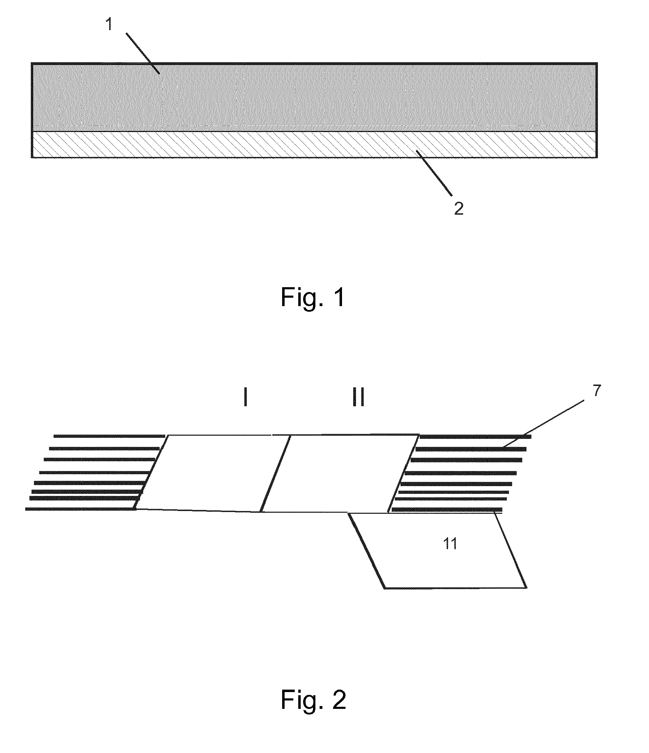

In der Figur 1 ist im Schnitt in Querrichtung (Querschnitt) das Klebeband gezeigt, das aus einem Gewebeträger 1 besteht, auf den einseitig eine Schicht einer selbstklebenden Beschichtung 2 aufgebracht ist. In der Figur 2 ist ein Ausschnitt eines Kabelbaums gezeigt, der sich aus einer Bündelung von einzelnen Kabeln 7 zusammensetzt und der mit dem erfindungsgemäßen Klebeband 11 ummantelt ist. Das Klebeband wird in einer schraubenlinienförmigen Bewegung um den Kabelbaum geführt. Der gezeigte Ausschnitt des Kabelbaums zeigt zwei Wicklungen I und II des Klebebands. Nach links hin würden sich weitere Wicklungen erstrecken, diese sind hier nicht dargestellt. In einer weiteren Ausführungsform für eine Ummantelung werden zwei mit einer Klebemasse ausgerüstete erfindungsgemäße Bänder 60, 70 mit ihren Klebemassen versetzt (bevorzugt um jeweils 50 %) aufeinander laminiert, so dass sich ein Produkt ergibt, wie es in Figur 3 dargestellt ist.

**Beispiele:** *Skizze der Beispiele:* Das erfindungsgemäße Klebeband wird nachfolgend in bevorzugter Ausführung anhand mehrerer Beispiele beschrieben, ohne damit die Erfindung irgendeiner Weise zu beschränken. Des Weiteren sind Vergleichsbeispiele aufgeführt, in denen nicht erfindungsgemäße Klebebänder dargestellt sind.

Zur Erläuterung der Erfindung wurden Beispielklebebänder nach folgendem Schema hergestellt: Die Haftklebstoffdispersionen wurden aus Polymer- und Harzdispersion entsprechend den Beispielrezepturen gemischt und mit einem Rührer innig homogenisiert. Anschließend wurden die Haftklebstoffdispersionen durch Einrühren eines Polyurethan-Assoziativverdickers (Borchigel 0625, OMG Borchers) auf eine Viskosität von ca. 5000 Pa*s bei einer Schergeschwindigkeit von 0,01 s$^{-1}$ eingestellt (gemessen mit Kegel/Platte Geometrie im Rotationsmodus mit einem Rheometer DSR 200 N von Rheometric Scientific). Mit einem Filmziehgerät wurde ein Polyestergewebe (gemäß den Angaben in den Beispielen) optional gemäß den Angaben im Beispiel so mit der verdickten Beispielhaftklebstoffdispersion bestrichen, dass nach dem Trocknen in einem Umluftofen bei 85 °C über 5 Minuten ein Klebmasseflächengewicht von ca. 20 g/m$^2$ resultierte. Das in dieser Weise imprägnierte Gewebe wurde in einem zweiten Arbeitsschritt analog mit der gleichen Dispersion bestrichen, so dass nach dem Trocknen in einem Umluftofen bei 85 °C über 10 Minuten ein Klebmassegesamtflächengewicht von 60, 70 oder 90 g/m$^2$ bzw. entsprechend den Angaben in den Beispielen resultierte.

**Beurteilungskriterien:** Die Kriterien für ein anwendungsgerechtes Klebeband für die Umwicklung von Kabeln ist vorliegend die Abflaggresistenz gemäß dem TFT-Test. Die gute Abrollkraft von Rolle nach Lagerung bei 40 °C über 4 Wochen sowie die Kabelverträglichkeit nach LV 312 kann für die nicht ESH-vernetzten Haftklebemassen den vorstehend genannten deutschen Patentanmeldungen entnommen werden (Seite 6).

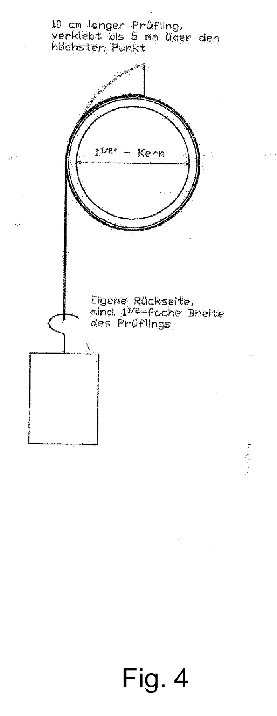

Durchführung der Tests: Die Messungen werden - soweit nicht ausdrücklich anders erwähnt - bei einem Prüfklima von 23 ± 1 °C und 50 ± 5 % rel. Luftfeuchte durchgeführt. Messung der Abflaggresistenz nach LV 312 beziehungsweise TFT-Methode (Threshold Flagging Time): Zur Ermittlung des Flaggingverhaltens nach der TFT-Methode kommt ein Test zum Einsatz, bei dem durch die Applikation der flach präparierten Prüflinge auf einem 1½"-Kern eine zusätzliche Biegespannung erzeugt wird. Die Kombination aus Zugbelastung durch ein Prüfgewicht und Biegespannung bewirkt ein flagging-ähnliches Ablösen des Klebebandes vom verklebten oberen Ende her und ein letztendliches Versagen durch Abfallen der Prüflinge (siehe Figur 4, in der auch der schematische Aufbau gezeigt ist). Die Zeit in Minuten bis zum Abfallen ist das Ergebnis. Die ausschlaggebenden Parameter für die Haltezeit der Prüflinge sind Gewicht und Temperatur, wobei das Gewicht so zu wählen ist, dass sich Werte von mindestens 100 min ergeben.

Der zylindrisch geformte Prüfdorn ist 1 ½"-Pappkern mit 42 $\pm$ 2 mm Außendurchmesser, versehen mit einer Markierungslinie 5 mm neben der Scheitellinie.

Der Haftgrund ist die eigene Rückseite des Klebebands.

Der Handroller hat ein Gewicht von 2 kg.

Das Prüfgewicht beträgt 1 kg.

Das Prüfklima ist 23 $\pm$ 1 °C bei 50 $\pm$ 5 % rel. Feuchte beziehungsweise 40 °C im Wärmeschrank.

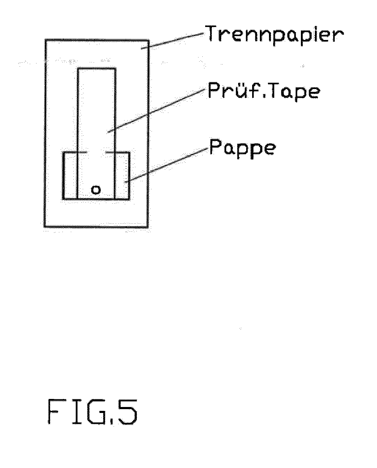

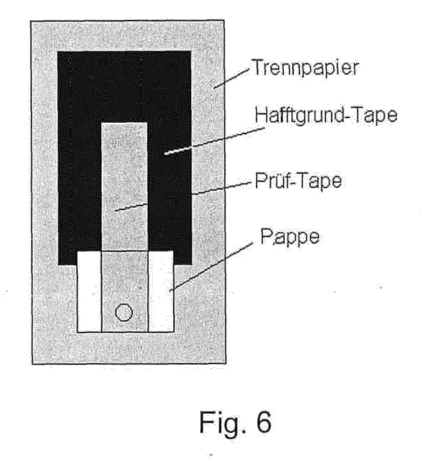

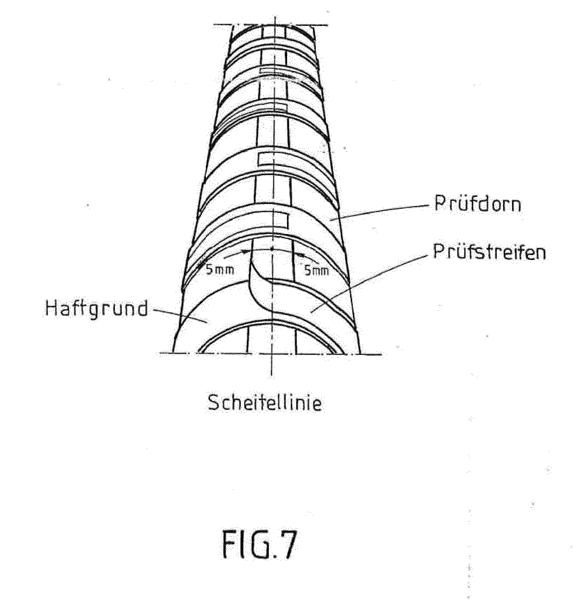

Die Prüfung erfolgt an Streifen von 19 mm breiten Klebebändern. Ein Streifen von 400 mm Länge wird auf Trennpapier geklebt und zu drei Streifen von je 100 mm Länge zugeschnitten. Dabei ist eine frische Cutterklinge zu verwenden. Die Rückseite darf nicht berührt werden. Unter eines der Enden eines jeden Streifens wird ein Pappkärtchen geklebt und der Verbund gelocht (siehe Figur 5). Die Prüfstreifen werden nun einzeln mittig auf Streifen des breiteren Haftgrunds (Klebeband in 1 ½-facher Breite des zu prüfenden Klebebands) verklebt, so dass das Pappkärtchen noch knapp (2 bis 3 mm) am Ende überlappt (siehe Figur 6). Die Prüflinge werden mit dem 2 kg-Handroller in 3 Zyklen mit einer Geschwindigkeit von 10 m/min überrollt. Die fertigen Prüfmuster, also die Prüfstreifen samt Haftgrund, werden nun so auf den Pappkern geklebt, dass das obere Ende des Prüflings den Scheitelpunkt um 5 mm überlappt (siehe Figur 7). Dabei darf nur der Haftgrund und nicht der Prüfling angedrückt werden. Die fertig präparierten Prüflinge werden für 20 $\pm$ 4 Stunden ohne Gewichtsbelastung in einem Klimaraum bei 40 °C belassen.

Danach werden Gewichte mit einer Masse von einem Kilogramm angehängt und die Messuhren gestartet. Die Messung endet nach Versagen aller drei Prüflinge eines Musters. Der Median der drei Einzelmessungen wird in Minuten angegeben. Die Haltezeit wird in Minuten angegeben. Dabei gilt ein TFT-Wert von > 1000 Minuten, vorzugsweise größer 1200 Minuten, besonders bevorzugt größer 2000 Minuten als unterer Grenzwert bei der Resistenz gegen Abflaggen.

Erweichungspunkt: Messung gemäß ASTM E28-99 (2009)

Die Biegesteifigkeit wird mit einem Softometer KWS basic 2000mN (Firma. Wolf Messtechnik GmbH) bestimmt. (MD) steht für machine direction, d.h. die Biegesteifigkeit wurde in Maschinenrichtung bestimmt.

Gelwert: Der Gelwert wird durch Soxhlet-Extraktion ermittelt, über die in kontinuierlicher Extraktion lösliche Inhaltsstoffe aus Polymeren extrahiert werden. Im Falle der Gelwertbestimmung von (waterborne) Polyacrylat-Haftklebmassen wird durch ein geeignetes Lösemittel, wie zum Beispiel Tetrahydrofuran, die löslichen Anteile eines Polymers - des sogenannten Sols - von den unlöslichen Anteilen - dem sogenannten Gel - extrahiert. Vorbereitung: Die zu extrahierende Masse wird auf silikonisiertem Trennpapier in einem dünnen Film aufgetragen - i.d.R. 120 $\mu$m Schichtdicke - und circa 12 h bei 80 °C getrocknet (Umlufttrockenschrank). Aufbewahrt werden die Filme im Exsikkator über Trocknungsmittel. Die Extraktionshülsen Typ 603 Whatman werden 12 h bei 80 °C getrocknet, das Leergewicht der Hülsen bestimmt und im Exsikkator bis zur Verwendung gelagert. Gelwertbestimmung: ca. 1 g Haftklebemasse wird in Extraktionshülse eingewogen. Ein 100 ml Rundkolben der Soxhlet-Apparatur wird mit 60 ml Tetrahydrofuran gefüllt und zum Sieden erhitzt. THF-Dämpfe steigen durch das Dampfrohr der Soxhlet-Apparatur auf und kondensieren im Kühler und THF tropft in die Extraktionshülse und extrahiert Sol Anteil. Im Verlauf der Extraktion läuft das THF I mit dem extrahierten Sol zurück in den Kolben. Gelöstes Sol reichert sich im Kolben zunehmend an. Nach 72 h kontinuierlicher Extraktion ist das Sol vollständig im THF gelöst. Die Extraktionshülse wird nun - nach Abkühlung der Apparatur auf Raumtemperatur - entnommen und über 12 h bei 80 °C getrocknet. Die Hülsen werden bis zur Massekonstanz im Exsikkator aufbewahrt und anschließend ausgewogen. Der Gelwert des Polymers berechnet sich anhand folgender Formel:

$$Gelwert = \frac{m_3 - m_1}{m_2 - m_1} \cdot 100\ \%$$

mit

m$_1$: Masse Extraktionshülse, leer
m$_2$: Masse Extraktionshülse + Polymer
m$_3$: Masse Extraktionshülse + Gel

Viskositätsmessung nach DMA (Dynamisch-Mechanischen Analyse): Um zu ermitteln, ob durch die ESH-Bestrahlung die Kohäsion der Haftklebemasse verbessert werden kann, um ein Eindringen der Masse in die Geweberückseite beim Aufwickeln zu minimieren, wurden Rheologieuntersuchungen durchgeführt.

Messgerät RDA III (Bruker), 2000 g Federgelagert mit Normalkraft, Temperierung: Ofen, Messgeometrie: parallele Platten; Durchmesser: 25 mm;

Frequenzsweep: 0,1 rad/s bis 512 rad/s, Temp.: 25 °C, Deformation: 3 %;

Aufheizrate: 2,5 °C/min, Deformation: 1 %

Zur Bestimmung der Rheologie mittels Frequenzsweep bei RT (25 °C) wurden die Proben der ESH-bestrahlten und unbestrahlten Klebebänder jeweils in drei Lagen übereinander mit einem 25 mm Henkellocheisen ausgestanzt und die angeschliffenen Rückseiten mittels Sekundenkleber verklebt. Der Frequenzsweep wurde über 0,1 bis 512 rad/s durchgeführt; der tan delta und die komplexe Viskosität $|\eta|^*$ bei 0,1 und 100 rad/s sowie der Crossoverpunkt ausgewertet.

Messung der Klebkraft: Zur Messung der Klebkraft der reinen Dispersionen wurden zunächst Ausstriche der Klebmassen präpariert. Dazu wurden die Dispersionen auf eine PET-Folie (Polyethylenterephthalat) einer Dicke von 23 $\mu$m gegeben und mit einem Filmziehgerät so abgerakelt, dass nach dem Trocknen über 5 Minuten bei 105 °C in einem Umlufttrockenschrank ein Klebmasseflächengewicht von 30 g/m$^2$ resultierte.

Aus diesem Bogen wurden mit einem Cuttermesser Streifen von 20 mm Breite und 25 cm Länge herausgeschnitten. Für die Messung der Klebkraft der Formulierungen mit Harz wurden wie oben beschrieben Ausstriche auf Polyestergewebe herangezogen und ebenfalls mit einem Cuttermesser in Streifen von 20 mm Breite und 25 cm Länge geschnitten. Die Klebkraft auf Stahl der ESH-vernetzten Muster wurde gemäß ASTM D3330 gemessen.

Messung der Glasübergangstemperaturen: Die Glasübergangstemperaturen wurden auf dem Dynamischen Differenzkalorimeter-Gerät DSC 204 F1 "Phönix" der Firma Netzsch, Deutschland, in 25 $\mu$l Aluminiumtiegeln mit gelochtem Deckel unter Stickstoffatmosphäre (20 ml/min Gasfluss) bestimmt. Die Probeneinwaage betrug 8 $\pm$ 1 mg. Die Proben wurden zweimal von -140 °C bis auf 200 °C mit einer Heizrate von 10 K/min vermessen. Ausgewertet wurde die 2. Aufheizkurve. Die Methode lehnt sich an die DIN 53 765 an.

**Zusammensetzung einer erfindungsgemäßen Polymerdispersion:**

| Monomer | Polymer 1 |
|---|---|
| 2-Ethylhexylacrylat | 93 |
| Butylacrylat | |
| Acrylsäure | 4 |
| Acrylnitril | 3 |
| Methylmethacrylat | - |
| Vinylacetat | - |

Die Glasübergangstemperaturen des Polymeres 1 (Angabe in °C): -47

Aus Polymer 1 wurden die in Tabelle 1 aufgeführten Haftklebemassen durch Abmischen mit Klebharzdispersionen formuliert..

**Tabelle 1: Haftklebemasse umfassend Polymer 1**

Polymer 1                                                    70 Gew-.%
Kolophoniumesterharz                                30 Gew.-%
Snowtack 100G, Lawter

Das Kolophoniumesterharz Snowtack 100G, Lawter, hat einen Erweichungspunkt von 99 °C.

Die Glasübergangstemperatur der Haftklebeformulierung wurde als dynamischer Tg mittels rheologischer Untersuchung (Temp.sweep) mit 7-8°C ermittel.

**Beispiel 1:**

Träger: PET-Gewebe, 130 g/m$^2$
Kette: 48 Fäden/cm x 167 dtex
Schuss: 24 Fäden/cm x 167 dtex

Haftklebmasse: Harzmodifizierte Acrylatdispersion, 90 g/m$^2$; (Polymer 1 (Triple A) mit 30 Gew.-% Kolophoniumesterharz)

ESH-Dosis: bis 50 kGy (Beschleunigungsspannung 200 kV)

Zum Vergleich ist auch der Wert ohne ESH-Vernetzung aufgeführt.

**Beispiel 2:**

Träger: PET-Gewebe, 70 g/m$^2$

Kette: 34 Fäden/cm x 84 dtex
Schuss: 28 Fäden/cm x 167 dtex

Imprägnierung Acrylatdispersion, 20 g/m$^2$
Haftklebmasse: Harzmodifizierte Acrylatdispersion, 70 g/m$^2$, (Polymer 1 (Triple A) mit 30 Gew.-% Kolophoniumesterharz)
ESH-Dosis: bis 30 kGy (Beschleunigungsspannung 200 kV)
Zum Vergleich ist auch der Wert ohne ESH-Vernetzung aufgeführt.
**Vergleichsbeispiel 3:**

Träger: PET-Gewebe, 130 g/m$^2$
Kette: 48 Fäden/cm x 167 dtex
Schuss: 24 Fäden/cm x 167 dtex

Haftklebmasse: Acrylat-Hotmelt (acResin® A 260 UV, BASF), 90 g/m$^2$
UV-Dosis: 25 mJ/cm$^2$
**Vergleichsbeispiel 4:**

Träger: PET-Gewebe, 70 g/m$^2$
Kette: 34 Fäden/cm x 84 dtex
Schuss: 28 Fäden/cm x 167 dtex

Imprägnierung Acrylatdispersion, 20 g/m$^2$
Haftklebmasse: Acrylat-Hotmelt (acResin® A 260 UV, BASF), 60 g/m$^2$
UV-Dosis: 20 mJ/cm$^2$

Tabelle 2.

| | ESH-Dosis kGy | Klebkraft auf Stahl N/cm | Klebkraft auf Rückseite N/cm | TFT min |
|---|---|---|---|---|
| Werte zum Beispiel 1 | 0 | 5,8 | 4,5 | 1050 |
| | 5 | 5,6 | 4,1 | 1072 |
| | 10 | 5,7 | 3,9 | 1086 |
| | 20 | 5,5 | 3,5 | 1363 |
| | 30 | 5,7 | 3,5 | 1724 |
| | 40 | 5,2 | 3,4 | 2601 |
| | 50 | 4,8 | 3,3 | 2654 |
| Werte zum Beispiel 2 | 0 | 5,8 | 3,4 | 1329 |
| | 5 | 5,5 | 3,2 | 1581 |
| | 10 | 5,6 | 3,4 | 2519 |
| | 20 | 5,5 | 2,8 | 3485 |
| | 30 | 5,7 | 3,2 | 4925 |
| Werte zum Vergleichsbeispiel 3 | - | 5,5 | 6,5 | 311 |
| Werte zum Vergleichsbeispiel 4 | - | 5,0 | 4,0 | 172 |

Der Vergleich der zwei Beispiele 1 und 2 zeigt deutlich, welchen Einfluss die Wahl des Trägermaterials auf das Flaggingverhalten des Klebebandes hat. Das Produktdesign ist in beiden Fällen so ausgelegt, dass das unvernetzte Muster der jeweiligen Testreihe einen TFT-Wert knapp über 1000 min aufweist. Im Fall des weichen, dünnen Trägermaterials aus Beispiel 2 genügt eine vergleichsweise geringe ESH-Dosis von 10 kGy um die TFT-Zeit auf über 2000 min anzuheben. Desweiteren steigt die TFT-Zeit mit zunehmender Vernetzung noch deutlich an. Dieses Beispiel bietet somit exzellente Voraussetzungen für ein absolut flaggingfreies Produkt. In Beispiel 1 wurde dagegen ein deutlich dickerer und biegesteiferer Gewebeträger eingesetzt. Um hier einen Startwert von über 1000 min TFT zu realisieren ist bereits ein hoher Masseauftrag von 90 g/m$^2$ notwendig. Durch die Vernetzung der Masse mit 40 kGy erhält man auch in diesem Fall einen TFT-Wert von über 2000 min, was einem Klebeband mit ausgezeichneten Flaggingeigenschaften entspricht. Allerdings ist aus dieser Serie auch ersichtlich, dass keine nennenswerte weitere Steigerung des TFT-Wertes durch noch höhere ESH-Dosen möglich ist.

| | Biegesteifigkeit Rohträger (MD) * mN/60mm | Biegesteifigkeit Klebeband (MD) * mN/60mm |
|---|---|---|
| Werte zum Beispiel 1 | 10 | 18 |
| Werte zum Beispiel | 2 ** | 8 |

* Die Biegesteifigkeit des Klebebands wurde mit einem Softometer KWS basic 2000 mN der Firma Wolf Messtechnik GmbH bestimmt

**ohne Impragnierung mit Acrylatdispersion

Bei Applikation der Klebebänder auf einem Kabelbaum zeigt sich eindeutig der Vorteil, den die Acrylatdispersionen hinsichtlich des Flaggings besitzen. Während die Vergleichsbeispiele 3 und 4 nach Lagerung deutlich abstehende Bandenden über 5 mm Länge aufweisen, reduziert sich das Flagging bei den Beispielen 1 und 2 auf unter 2 mm. Bei Anwendung der entsprechenden ESH-Dosis - 40 kGy in Beispiel 1 und 10 kGy in Beispiel 2 - ist kein Flagging mehr festzustellen.

Zu den Vergleichsbeispielen ist noch hinzuzufügen, dass sich das Flaggingverhalten hier nicht besonders gut über den Vernetzungsgrad steuern lässt. Im Gegensatz zu den Acrylatdispersionen findet bei der Acrylat-Hotmeltmasse eine engmaschigere Vernetzung statt, die sich schon bei geringeren Dosen ab ca. 15 mJ/cm$^2$ negativ bemerkbar macht. Durch die stärkere Vernetzung sinkt das Vernetzungsvermögen der Klebmasse, was sich in Form von niedrigeren Klebkräften und TFT-Zeiten bemerkbar macht.

Da die Darstellung von leicht abrollbaren Klebebändern erst ab einer UV-Dosis von 20 mJ/cm$^2$ möglich ist, kann die Klebmasse hinsichtlich ihrer Flaggingeigenschaften nicht optimal eingestellt werden.

**Patentansprüche**

**1.** Klebeband, insbesondere zum Umwickeln von Kabeln, umfassend einen vorzugsweise textilen Träger und eine auf mindestens einer Seite des Trägers aufgebrachte Haftklebemasse in Form einer getrockneten und Elektronenstrahl (ESH) vernetzten polymeren Acrylatdispersion, umfassend Polymere, die aufgebaut sind aus

a) monomeren Acrylaten und optional
b) ethylenisch ungesättigten Comonomeren, die keine Acrylate sind,
wobei die Haftklebemasse zwischen 15 und 100 Gewichtsteile eines Klebrigmachers (bezogen auf die Masse der getrockneten polymeren Dispersion) enthält.

**2.** Klebeband nach Anspruch 1,
**dadurch gekennzeichnet, dass** die Acrylatdispersion Polymere umfasst, die aufgebaut sind aus

a) größer gleich 40 Gew.-% monomeren Acrylaten und
b) 0 bis 60 Gew.-% ethylenisch ungesättigten Comonomeren,

wobei die monomeren Acrylate mono-, di und/oder mehrfunktionelle Acrylate umfassen und, wobei die ethylenisch ungesättigten Comonomere ausgewählt sind aus Ethylen enthaltenden Monomeren, Vinyl-funktionellen Monomeren und ungesättigten Kohlenwasserstoffen mit 3 bis 8 C-Atomen.

**3.** Klebeband nach Anspruch 1 oder 2,
**dadurch gekennzeichnet, dass** die Acrylatdispersion einen Gelwert von größer gleich 40 %, bestimmt mittels Soxhlet-Extraktion, aufweist, bevorzugt weist die ESHbestrahlte Acrylatdispersion einen Gelwert größer gleich 45 %.

**4.** Klebeband nach einem der vorstehenden Ansprüche 1 bis 3,
**dadurch gekennzeichnet, dass**
die getrockneten polymere Acrylatdispersion in der Haftklebemasse aus einer wässrigen Acrylatdispersion gebildet wird.

**5.** Klebeband nach einem der Ansprüche 1 bis 3,
**dadurch gekennzeichnet, dass** die Acrylatdispersion Polymere umfasst, die aufgebaut sind aus

(i)

a) monomeren Acrylaten ausgewählt aus 0 bis 90 Gew.-% n-Butylacrylat, 2-Ethylhexylacrylat, 2-Ethylhexylacrylat und Ethylacrylat und 0 bis 2 Gew.-% eines di- oder mehrfunktionellen Monomers, besonders vorzugsweise zu 0 bis 1 Gew.-% eines di- oder mehrfunktionellen Monomers,
b) ethylenisch ungesättigten Comonomeren zu 10 bis 60 Gew.-% ausgewählt aus mindestens einem ethylenisch ungesättigten monofunktionellen Monomer oder einer Mischung dieser und 0 bis 10 Gew.-% eines ethylenisch ungesättigten Monomers mit einer Säure- oder Säureanhydridfunktion,

oder
(ii)

a) monomeren Acrylaten ausgewählt aus 90 bis 99 Gew.-% n-Butylacrylat und/oder 2-Ethylhexylacrylat und 0 bis 2 Gew.-% eines di- oder mehrfunktionellen Monomers, besonders vorzugsweise zu 0 bis 1 Gew.-% eines di- oder mehrfunktionellen Monomers,
b) ethylenisch ungesättigten Comonomeren zu 10 bis 1 Gew.-% ausgewählt aus mindestens einem ethylenisch ungesättigten monofunktionellen Monomer oder einer Mischung dieser und 0 bis 10 Gew.-% eines ethylenisch ungesättigten Monomers mit einer Säure- oder Säureanhydridfunktion,

oder
(iii)

a) monomeren Acrylaten ausgewählt aus 30 bis 69 Gew.-%, vorzugsweise 40 bis 60 Gew.-% Alkylacrylester mit $C_4$- bis $C_{12}$-Alkylresten,
b)ethylenisch ungesättigten Comonomeren zu 5 bis 25 Gew.-%, vorzugsweise 10 bis 22 Gew.-% Ethylen, 20 bis 55 Gew.-%, vorzugsweise 28 bis 38 Gew.-% Vinylacetat und 0 bis 10 Gew.-% andere ethylenisch ungesättigte Verbindungen;

wobei die Acrylatdispersion hergestellt wird, indem die Monomere gemäß i, ii und/oder iii in einer Emulsionspolymerisation umgesetzt werden.

6. Klebeband nach einem der Ansprüche 1 bis 5,
**dadurch gekennzeichnet, dass**

a) die monomeren Acrylate ausgewählt sind aus Alkyl(meth)acrylaten, bevorzugt $C_1$-bis $C_{20}$-Alkyl(meth)acrylate $C_1$- bis $C_{10}$-Hydroxyalkyl(meth)acrylate, wie insbesondere Hydroxyethyl- oder Hydroxypropyl(meth)acrylat, Säureamide wie Acrylamid oder Methacrylamid, sowie Mischungen von zwei oder mehreren der Monomere,
b) die monomeren Comonomere ausgewählt sind aus Ethylen, aromatischen Vinylmonomeren, wie Styrol, $\alpha$-Methylstyrol und Vinyltoluol, Divinylbenzol, Vinylester aus bis zu 20 Kohlenstoffatomen enthaltenden Carbonsäuren, wie Vinyllaurat, Vinylether aus bis zu 10 Kohlenstoffatomen enthaltenden Alkoholen wie Vinylmethylether oder Vinylisobutylether, Vinylhalogenide, wie Vinylchlorid oder Vinylidendichlorid, Itaconsäure, Maleinsäure, Fumarsäure und/oder Maleinsäureanhydrid, Acrylnitril und/oder Methacrylnitril, ungesättigten Kohlenwasserstoffen mit 3 bis 8 Kohlenstoffatomen, wie Propen, Butadien, Isopren, 1-Hexen oder 1-Octen sowie Mischungen von zwei oder mehr Comonomeren.

7. Klebeband nach einem der Ansprüche 1 bis 6,
**dadurch gekennzeichnet, dass**
die a) monomeren Acrylate ausgewählt sind aus Acrylsäure oder Methacrylsäure, n-Butylacrylat, Ethylacrylat, wie 2-Ethylhexylacrylat, 2-Ethylhexylacrylat sowie Mischungen von zwei oder mehr Monomeren und di- oder mehrfunktionelle Monomere ausgewählt sind aus Alkyldiacrylaten, wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, und Triacrylaten, wie Trimethylolpropantriacrylat, und Tetraacrylate, wie Pentaerythritoltetraacrylat.

8. Klebeband nach einem der Ansprüche 1 bis 7,
**dadurch gekennzeichnet, dass**
der Haftklebemasse 20 bis 80 Gewichtsteile Klebrigmacher, weiter bevorzugt 30 bis 50 Gewichtsteile zugesetzt sind.

9. Klebeband nach Anspruch 8,
**dadurch gekennzeichnet, dass**
als Klebrigmacher Klebharze mit einem Erweichungspunkt oberhalb von 80 °C gemäß ASTM E28-99 (2009), bevorzugt Harze auf Basis von Terpenphenolen und/oder Kolophoniumestern mit einem Erweichungspunkt oberhalb von 90 °C gemäß ASTM E28-99 (2009) eingesetzt werden.

10. Klebeband nach einem der Ansprüche 1 bis 9,
**dadurch gekennzeichnet, dass**
die Glasübergangstemperatur der Haftklebemasse unterhalb von +15 °C (ermittelt mit DSC (Differential Scanning Calorimetry) gemäß DIN 53 765 bei einer Aufheizrate von 10 K/min) liegt.

11. Klebeband nach einem der Ansprüche 1 bis 10,
**dadurch gekennzeichnet, dass**
die Haftklebemasse nach ASTM D3330 eine Klebkraft auf Stahl von mindestens 5,6 N/cm aufweist (bei einem Flächengewicht der Haftklebemasse von kleiner gleich 90 g/m$^2$ auf Polyestergewebe als Träger).

12. Klebeband nach einem der Ansprüche 1 bis 11,
**dadurch gekennzeichnet, dass**
der Träger ein textiler Träger ist, bevorzugt ein Gewebe, insbesondere ein Polyestergewebe, ein Vlies oder Gewirk.

**13.** Klebeband nach einem der Ansprüche 1 bis 12,
**dadurch gekennzeichnet, dass**
der Träger ein Flächengewicht von 30 bis 250 g/m$^2$, vorzugsweise von 50 bis 200 g/m$^2$, besonders bevorzugt von 60 bis 150 g/m$^2$ aufweist.

**14.** Klebeband nach einem der Ansprüche 1 bis 13,
**dadurch gekennzeichnet, dass**
der TFT-Wert (Threshold Flagging Time) nach der Elektronenstrahl-Vernetzung größer gleich 1000 Minuten beträgt, vorzugsweise größer gleich 2000 Minuten, besonders bevorzugt größer gleich 2500 Minuten.

**15.** Klebeband nach einem der Ansprüche 1 bis 14,
**dadurch gekennzeichnet, dass**
der TFT-Wert (Threshold Flagging Time) nach der Elektronenstrahl-Vernetzung im Vergleich zum TFT-Wert vor der Elektronenstrahl-Vernetzung (ESH) etwa um den Faktor 2 größer ist.

**16.** Klebeband nach einem der Ansprüche 1 bis 15,
**dadurch gekennzeichnet, dass**
die Viskosität der Haftklebemasse durch die Elektronenstahl-Vernetzung (ESH) im Wesentlichen unverändert bleibt oder die Elektronenstrahl-Vernetzung von Polymeren im Wesentlichen innerhalb der Polymerknäule erfolgt, wobei sich das Molekulargewicht der Polymere in den Polymerknäulen im Vergleich zu den unbestrahlten Polymerknäulen erhöht, insbesondere ist die Elektronenstrahl-Vernetzung der Polymere zwischen den Polymerknäulen im Vergleich zur Elektronenstrahl-Vernetzung innerhalb der Polymerknäule geringer.

**17.** Verfahren zur Herstellung eines Klebebandes, insbesondere zum Umwickeln von Kabeln, aus einem textilen Träger und einer auf mindestens einer Seite des Trägers aufgebrachten Haftklebemasse, insbesondere nach einem der Ansprüche 1 bis 16,
indem die Haftklebemasse

- auf mindestens einer Seite des textilen Trägers aufgebracht wird,
- optional wird die Haftklebemasse getrocknet,
- die Haftklebemasse wird mit Elektronenstrahlen vernetzt, wobei vorzugsweise der Träger auf der Elektronenstrahlenquelle abgewandten Seite der Haftklebemasse angeordnet ist,

wobei die Haftklebemasse eine polymere Acrylatdispersion umfasst und zwischen 15 und 100 Gewichtsteile eines Klebrigmachers (bezogen auf die Masse der getrockneten polymeren Dispersion) enthält.

**18.** Verfahren nach Anspruch 17,
**dadurch gekennzeichnet, dass**
die Elektronenstrahl-Vernetzung (ESH) mit 0,001 bis 80 kGy, vorzugsweise mit 5 bis 80 kGy, besonders bevorzugt mit 10 bis 50 kGy erfolgt.

**19.** Verfahren nach Anspruch 17 oder 18,
**dadurch gekennzeichnet, dass**
der textile Träger ein flächiger textiler Träger ist, vorzugsweise ein Gewebe, vorzugsweise ein Polyestergewebe, ein Vlies oder ein Gewirke.

**20.** Verfahren nach einem der Ansprüche 17 bis 19,
**dadurch gekennzeichnet, dass**
der Träger ein Flächengewicht von 30 bis 250 g/m$^2$, vorzugsweise 50 bis 200 g/m$^2$, weiter vorzugsweise 60 bis 150 g/m$^2$ aufweist.

**21.** Verfahren nach einem der Ansprüche 17 bis 20,
**dadurch gekennzeichnet, dass**
die Haftklebemasse eine wässrige Acrylatdispersion ist, insbesondere wird die Acryldispersion durch das Verfahren der Emulsionspolymerisation hergestellt.

**22.** Verfahren nach einem der Ansprüche 17 bis 21,
**dadurch gekennzeichnet, dass**

die dem Trägermaterial abgewandte Seite der Haftklebemasse mit Elektronenstrahlen (ESH) bestrahlt wird, insbesondere beträgt die Dosis zwischen 5 bis 50 kGy, insbesondere zwischen 5 bis 45 kGy.

23. Verfahren nach einem der Ansprüche 17 bis 22,
**dadurch gekennzeichnet, dass**
der Haftklebemasse Rheologieadditive zugesetzt werden.

24. Klebeband erhältlich nach einem Verfahren nach einem der Ansprüche 17 bis 23.

25. Klebeband nach Anspruch 24, **dadurch gekennzeichnet, dass** es eine mit Elektronenstrahlen (ESH) vernetze Haftklebemasse aufweist, die eine Acrylatdispersion und einen Klebrigmacher umfasst, wobei das Klebeband einen TFT-Wert von größer gleich 1500 Minuten aufweist, vorzugsweise größer gleich 2000 Minuten.

26. Verwendung von Elektronenstrahlen zur Vernetzung von Haftklebemassen umfassend Acrylatdispersionen auf Trägern von Klebebändern, insbesondere von Klebebändern, die zum Umwickeln von Kabeln geeignet sind.

27. Verwendung von Elektronenstrahl (ESH) vernetzten Klebebändern nach einem der Ansprüche 1 bis 16 oder 24 oder der Klebebänder hergestellt nach einem Verfahren nach einem der Ansprüche 17 bis 23 zum Umwickeln von Kabeln, insbesondere von Kabeln die erhöhter Temperatur und/oder Feuchte ausgesetzt sind.

28. Verwendung eines Klebebandes nach zumindest einem der Ansprüche 1 bis 16 oder 24 oder hergestellt nach einem Verfahren nach einem der Ansprüche 17 bis 23 zum Ummanteln von langgestrecktem Gut, wobei das Klebeband in einer Schraubenlinie um das langgestreckte Gut geführt wird, insbesondere wird das langgestreckte Gut in axialer Richtung von dem Band umhüllt.

29. Langgestrecktes Gut, wie insbesondere ein Kabelsatz, ummantelt mit einem Klebeband nach einem der Ansprüche 1 bis 24.

## Fig. 1

## Fig. 2

Fig. 3

Fig. 4

Trennpapier

Prüf.Tape

Pappe

FIG.5

Trennpapier

Hafftgrund-Tape

Prüf-Tape

Pappe

Fig. 6

FIG.7

Fig. 8

Fig. 9

cohesive failure          adhesive failure

high edge lifting          minimal edge lifting          high edge lifting

## Fig. 10

## Fig. 11

**Fig. 12**

**Fig. 13**

| Europäisches Patentamt European Patent Office Office européen des brevets | **EUROPÄISCHER RECHERCHENBERICHT** | **Nummer der Anmeldung** EP 12 17 9471 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D<br>Y | DE 198 46 901 A1 (BEIERSDORF AG [DE])<br>13. April 2000 (2000-04-13)<br>* Zusammenfassung *<br>* Seite 2, Zeile 1 - Zeile 11 *<br>* Seite 3, Zeile 18 - Zeile 31; Ansprüche 1,2,4,6 *<br>----- | 26<br><br>12,19 | INV.<br>C09J7/04<br>C09J133/04 |
| X<br><br>Y | EP 2 298 846 A1 (TESA SE [DE])<br>23. März 2011 (2011-03-23)<br><br>* Zusammenfassung *<br>* Absätze [0027], [0036] - Absätze [0040], [0048], [0050]; Ansprüche 1,3,6-9,12-14; Beispiele *<br>----- | 1-11,<br>13-18,<br>20-29<br>12,19 | |

**RECHERCHIERTE SACHGEBIETE (IPC)**

C09J

Der vorliegende Recherchenbericht wurde für alle Patentansprüche erstellt

| Recherchenort | Abschlußdatum der Recherche | Prüfer |
|---|---|---|
| München | 11. Januar 2013 | Meier, Stefan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes
    Dokument

EPO FORM 1503 03.82 (P04C03)

**EP 2 695 926 A1**

**ANHANG ZUM EUROPÄISCHEN RECHERCHENBERICHT
ÜBER DIE EUROPÄISCHE PATENTANMELDUNG NR.**

EP 12 17 9471

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2013

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE 19846901 | A1 | | 13-04-2000 | DE | 19846901 | A1 | 13-04-2000 |
| | | | | EP | 0994169 | A2 | 19-04-2000 |
| | | | | ES | 2213955 | T3 | 01-09-2004 |
| | | | | JP | 2000119606 | A | 25-04-2000 |
| | | | | US | 6284328 | B1 | 04-09-2001 |
| EP 2298846 | A1 | | 23-03-2011 | DE | 102009054955 | A1 | 24-03-2011 |
| | | | | EP | 2298846 | A1 | 23-03-2011 |

EPO FORM P0461

Für nähere Einzelheiten zu diesem Anhang : siehe Amtsblatt des Europäischen Patentamts, Nr.12/82

37

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19846901 A1
- EP 2298845 A1
- EP 1431360 A2
- DE 102011075156 A1
- DE 102011075159 A1
- DE 102011075152 A1
- DE 102011075160 A1
- EP 1378527 B1
- EP 0017986 B1
- EP 0185356 B1

- EP 0071212 B1
- EP 1448744 A1
- EP 1312097 A1
- EP 1300452 A2
- DE 10229527 A1
- WO 2006108871 A1
- EP 1367608 A2
- EP 1315781 A1
- DE 10329994 A1

**In der Beschreibung aufgeführte Nicht-Patentliteratur**

- *Schutzsysteme für Leitungssätze in Kraftfahrzeugen, Klebebänder; Prüfrichtlinie,* Oktober 2009
- **PETER A. LOVELL ; MOHAMED S. EI-AASSER.** Emulsion Polymerization and Emulsion Polymers. Wiley-VCH, 1997

- Vliesstoffe. Georg Thieme Verlag, 1982
- Textiltechnik-Vliesstofferzeugung. Arbeitgeberkreis Gesamttextil. 1996